# EUROPÄISCHE PATENTSCHRIFT

(11) **EP 0 737 215 B1**
(45) Veröffentlichungstag und Bekanntmachung des Hinweises auf die Patenterteilung: **02.06.1999**
(21) Anmeldenummer: 95904490.0
(22) Anmeldetag: 16.12.1994
(51) Int. Cl.: C08F 251/00, C08F 261/00, C08F 289/00, C11D 3/37, D06L 3/02, D06L 1/12, C02F 5/10

(54) **PFROPF-COPOLYMERISATE VON UNGESÄTTIGTEN MONOMEREN UND POLYHYDROXYVERBINDUNGEN, VERFAHREN ZU IHRER HERSTELLUNG UND IHRE VERWENDUNG**
GRAFT COPOLYMERS OF UNSATURATED MONOMERS AND POLYHYDROXY COMPOUNDS, PROCESS FOR PRODUCING THEM AND THEIR USE
COPOLYMERISATS GREFFES DE MONOMERES INSATURES ET COMPOSES POLYHYDROXY, LEUR PROCEDE DE PREPARATION ET LEUR UTILISATION

(30) Priorität: 22.12.1993 DE 4343993
(43) Veröffentlichungstag der Anmeldung: 16.10.1996
(73) Patentinhaber: STOCKHAUSEN GmbH & CO. KG, 47805 Krefeld (DE)
(72) Erfinder: KRAUSE, Frank, D-47533 Kleve (DE); KLIMMEK, Helmut, D-47803 Krefeld (DE)
(74) Vertreter: Wolff, Felix, Dr.
(86) Internationale Anmeldenummer: EP9404187
(87) Internationale Veröffentlichungsnummer: WO9517444

(56) Entgegenhaltungen:
- EP-A- 0 103 254
- EP-A- 0 184 894
- EP-A- 0 441 197
- EP-A- 0 479 245
- WO-A-94/01476
- DE-A- 4 316 740
- US-A- 3 709 780
- US-A- 5 264 470

## Beschreibung

Gegenstand der Erfindung sind wasserlösliche, saure Gruppen enthaltende Pfropfcopolymerisate mit einer zumindest teilweisen biologischen Abbaubarkeit auf der Basis von Polyhydroxyverbindungen und monoethylenisch ungesättigten Carbon- und Sulfonsäuren sowie ggf. weiteren Monomeren, Verfahren zu ihrer Herstellung sowie ihre Verwendung in wäßrigen Systemen. Dazu zählen z. B. die Inhibierung der negativen Auswirkungen von Wasserhärte, die dispergierende Wirkung auf Pigmente, der Einsatz in Wasch- und Färbeflotten, sowie die Verwendung als Hilfsmittel bei der Papier- und Lederherstellung.

Bei diesen Anwendungen der wasserlöslichen Polymere kommt es darauf an, mehrwertige Metallionen zu komplexieren, Härtebildner des Wassers am Ausfallen zu hindern, Pigmente in hoher Konzentration bei niedriger Viskosität zu dispergieren oder Schmutzteilchen in Waschprozessen zu suspendieren und am Wiederaufziehen auf das Gewebe zu hindern.

Aufgrund einer in den letzten Jahren immer stärker in den Vordergrund tretenden ökölogischen Betrachtungsweise war ein großer Teil der Bemühungen zur Entwicklung neuer Polymere auf deren biologische Abbaubarkeit gerichtet. In ganz besonderem Maße standen dabei die Produkte im Vordergrund, deren Anwendung und Entsorgung in wäßrigen Systemen erfolgte. In einigen Bereichen, wie etwa der Papierindustrie, erlebten daher abbaubare Polymere wie z. B. Stärken eine Renaissance als Bindemittel, in anderen Bereichen wurden Pfropfpolymere aus nachwachsenden Rohstoffen, wie Stärke oder Zucker, und synthetischen Monomeren entwickelt. Für viele Anwendungen sind die technischen Anforderungen aber relativ hoch und können von den Produkten auf Basis nachwachsender Rohstoffe nicht in der Weise erfüllt werden, wie es mit den bisher verwendeten rein synthetischen Polymeren der Fall war. Beispielhaft sind die Polycarboxylate in Misch-Schlichten für Textilfasern zu nennen, bei denen als Kompromiß zwischen Abbaubarkeit und Schlichteeigenschaft oft eine Mischung aus Stärke und Polycarboxylat eingesetzt wird.

Ein anderes wichtiges Einsatzgebiet wasserlöslicher Polymere sind die Wasch- und Reinigungsmittel.
In den letzten Jahren war dort die Entwicklung durch den Ersatz der Polyphosphatbestandteile geprägt, die, wie bekannt, zu einer Überdüngung der Gewässer und den unter dem Stichwort Eutrophierung bekannten Problemen führen.

Polyphosphate besitzen neben der Primärwaschwirkung auch ein günstiges Sekundärwaschverhalten, in dem sie die Erdalkalimetallionen aus dem Waschwasser, den Textilien und dem Schmutz entfernen, die Ausfällungen unlöslicher Erdalkalimetallsalze auf den Textilien verhindern und den Schmutz in der Waschlauge suspendiert halten. Dadurch werden auch nach mehreren Waschgängen Inkrustationen und Vergrauungen unterdrückt. Als Ersatzstoffe für Polyphosphate werden derzeit Polycarboxylate, wie Polyacrylsäuren und Acrylsäure/Maleinsäurecopolymere wegen ihrer Bindefähigkeit für Erdalkaliionen und wegen ihres Kalkdispergiervermögens eingesetzt, die durch den sogenannten Hampshire-Test bzw. dessen Modifikation nach Richter-Winkler charakterisiert werden. [Richter, Winkler in Tenside Surfactants Detergents 24 (1987) 4]. Für Waschprozesse ist neben dem erwähnten Calciumbinde- und Dispergiervermögen auch das hydrophile Suspendiervermögen nach K. Schulze, G. Schreier "Die Photometrische Bestimmung des hydrophilen Suspendiervermögens - ein Beitrag zur Beurteilung des Schmutztragevermögens von Waschflotten" (Hüls Information, Chemische Werke Hüls AG) von großer Bedeutung. Das hydrophile Suspendiervermögen ist ein Maß für das Schmutztragevermögen von Waschmittelbuildern und wird durch Trübungsmessungen an einer Eisenoxidsuspension ermittelt. Die derzeit sich im Handel befindenden Polycarboxylate haben ein äußerst geringes hydrophiles Suspendiervermögen, das in etwa 10 bis 20fach niedriger liegt als das des Natriumtnpolyphosphates.

Dem Problem der Eutrophierung konnte durch den Einsatz der Polycarboxylate begegnet werden. Ein biologischer Abbau dieser Polymeren findet jedoch nur in einem sehr begrenzten Maße statt, wobei die in der Literatur referierten Abbauraten zwischen 1 und 10 % liegen. Angaben hierzu sind in den Veröffentlichungen von J. Lester et. al. "The partitioning ofpolycarboxylic acids in activated sludge", Chemosphere, Voll 21, Nos. 4-5, pp 443-450 (1990), H. Schumann "Elimination von 14C-markierten Polyelektrolyten in biologischen Abwasserreinigungsprozessen", Wasser Abwasser (1991) S. 376-383, P. Berth "Möglichkeiten und Grenzen des Ersatzes von Phosphaten in Waschmitteln", Angewandte Chemie (1975) S. 115-142 zu entnehmen.
Vom ökologischen Standpunkt her ist die Einbringung großer Mengen nicht abbaubarer Verbindungen in die Umwelt bedenklich. Als Lösung bietet sich die Verwendung teilweise oder völlig biologisch abbaubarer, d.h. zu Kohlendioxid und Wasser mineralisierbarer Polymere an.

Polyhydroxyverbindungen vom Typ der Glycerine, Polysaccharide und Polyvinylalkohole stellen hinsichtlich ihrer bekannten biologischen Abbaubarkeit ideale Produkte dar, jedoch sind die anwendungstechnischen Eigenschaften ungenügend. Es hat deshalb Bemühungen gegeben, diesen Polyhydroxyverbindungen durch Modifizierung ein verbessertes Eigenschaftsniveau zu geben, so beschreibt z. B. die EP 0 427 349 A2 die Einführung von Carboxylgruppen in Polysaccharide durch Oxidation.

Das Calciumbindevermögen des so modifizierten Polysaccharids erfährt dadurch eine Verbesserung, erreicht aber bei weitem nicht das Niveau synthetischer Polycarboxylate. Mit dem Gewinn an Calciumbindevermögen verliert das Polysaccharid andererseits jedoch einen Teil seiner ursprünglich vorhandenen biologischen Abbaubarkeit. Ein alternativer Weg für die Synthese von zumindest teilweise abbaubaren wasserlöslichen Polymeren ist die Pfropfcopolymerisation von Kohlenhydraten und ungesättigten carboxylgruppenhaltigen Monomeren.

In der EP 0 324 595 A2 werden polyacrylatfreie Cobuilder beschrieben, die durch eine sehr aufwendige mehrstufige Modifizierung von Polyhydroxyverbindungen, u.a. auf Basis von Polyvinylalkohol gebildet werden. Man verestert dabei die Polyhydroxyverbindungen in Gegenwart von Katalysatoren mit einem Überschuß an Maleinsäureanhydrid in wasserfreien organischen Lösemitteln, trennt von nicht abreagierten Chemikalien ab und macht eine weitere Umsetzung mit Aminocarbonsäuren, um dann erneut durch Fällungsreaktionen in organischen Lösemitteln eine von Nebenprodukten gereinigte Verbindung zu erhalten. Aufgrund der angegebenen, langen Reaktionszeiten von z.T. 48 Stunden, der aufwendigen Herstellungweise und der Hydrolyseanfälligkeit, wegen der das Produkt nicht mit alkalischen oder sauren Waschmittelbestandteilen direkt in Verbindung kommen darf, stellen diese Produkte weder eine technische noch ökonomische Lösung für in Waschmittel einzusetzende Massenprodukte dar.

Aus der DE 37 14 732 C2 sind Copolymerisate ungesättigter Carbonsäuren mit alkalischen Lösungen zur Enolatbildung befähigter Monosaccharide bekannt, die teilweisen biologischen Abbau aufweisen und deren CaCO₃-Bindevermögen im Rahmen handelsüblicher Polyacrylate liegen soll. Als zur Enolatbildung befähigte Monosaccharide werden in erster Linie Glucose, Fructose, Mannose, Maltose, Xylose und Galactose erwähnt. Das Herstellungsverfahren ist technisch aufwendig und kompliziert, da nicht die Originalpolymerisatlösung, sondern der sich durch saure Fällung ergebende Niederschlag das Endprodukt des Herstellungsverfahrens darstellt, wobei das gefällte Polymerisat als schleimiger, schwer zu isolierender Niederschlag in einer schwierig abzutrennenden Form anfällt.

Aus der DE 40 03 172 A1 sind radikalisch initiierte Pfropfcopolymerisate aus Mono-, Oligo- bzw. Polysacchariden mit einer Kombination aus ungesättigten Mono- und Dicarbonsäuren als Waschmitteladditive bekannt, die zumindest eine teilweise biologische Abbaubarkeit aufweisen sollen. Darüber hinaus werden den Pfropfpolymerisaten vergleichbare bis bessere inkrustationsinhibierende Wirkungen in Textilwaschmitteln zugeschrieben als sie von den saccharidfreien Polymeren aus ungesättigten Mono- und Dicarbonsäuren bekannt sind, wie sie beispielsweise in der EP 0 025 551 B1 beschrieben werden. Die als Rezepturbestandteil der DE 40 03 172 A1 vorgeschriebenen Dicarbonsäuren zeigen neben ihrer, dem Fachmann hinlänglich bekannten, schweren Polymerisierbarkeit noch einen weiteren Nachteil, der sich in einem teilweisen Verlust an Carboxylgruppen durch den Austritt von Kohlendioxid während der Polymerisation zeigt. Diese Kohlendioxidabspaltung ist in der Literatur beschrieben von BRAUN in Makromol. Chemie 96 (1966) 100-121 und TATE in Makromol. Chemie 109 (1967) 176-193 und bedeutet für das Verfahren einen ökonomischen Verlust. Außerdem wird die Effektivität des Polyelektrolyten durch den teilweisen Verlust der Carboxylgruppen gestört. Weiterhin werden die Polymerisate nach DE 40 03 172 A1 zwar durch Klärschlämme eliminiert, eindeutige Angaben zum biologischen Abbau sind jedoch nicht festzustellen.

In der japanischen Patentantragsveröffentlichung JP-A-61-31497 wird die Verwendung eines Pfropfpolymers als biologisch abbaubare Waschmittelkomponente beschrieben. Diese Pfropfpolymere sind aus Polysacchariden vom Typ Stärke oder Dextrin oder Cellulose und wasserlöslichen Monomeren aufgebaut, wobei unter den wasserlöslichen Monomeren diejenigen mit Carboxylgruppen und unter diesen wiederum (Meth)Acryl-, Itacon-, Malein- oder Fumarsäure eindeutig bevorzugt werden. In den Anwendungsbeispielen werden Pfropfpolymere aus Dextrin und Acrylsäure beschrieben, die Dextringehalte von 67 bis 34 Gew% aufweisen. Die biologische Abbaubarkeit wurde entsprechend den MITI-Richtlinien getestet und bewegte sich zwischen 42 und 10 %, d. h. sie lag noch unter dem Gehalt an Naturstoff im Pfropfpolymerisat. Bezüglich des Calciumbindevermögens und der Beständigkeit gegen Hartwasser werden keine Angaben gemacht. Die Waschkraft eines dieser Pfropfpolymeren enthaltenden Waschmittels war, trotz einer sehr hohen Einsatzmenge von 20 Gew.% Pfropfpolymer, nur auf dem Niveau eines Vergleichswaschmittels mit der dem Pfropfpolymer entsprechenden Menge an Zeolith.

In der EP 0 465 287 A1 wird eine Waschmittelkomposition beschrieben, die u.a. ein Pfropfpolymer als Builder enthält, der aus synthetischer Polydextrose und einem ungesättigten wasserlöslichen Monomer aufgebaut ist. Ausdrücklich bevorzugt werden die Monomeren (Meth)Acrylsäure bzw. in Kombination mit Malein- oder Itaconsäure. In den Beispielen werden lediglich Pfropfpolymere aus Polydextrose und Acrylsäure aufgeführt und bei einem Waschversuch wurde im Vergleich zu Zeolith eine um 46% verminderte Inkrustation gefunden. Dieses Ergebnis ist deutlich schlechter als die Resultate der Waschversuche mit den Pfropfpolymerisaten gemäß DE 40 03 172 A1, wo Inkrustationsinhibierungen von bis zu 57% erreicht wurden.

Demzufolge sind die Propfpolymerisate nach EP 0 465 287 A1 und nach JP-A-6131497 in Waschprozessen weniger wirksam als die Polymerisate nach DE 40 03 172 A1. Für eine vergleichende Beurteilung des Calciumbindevermögens oder etwa der Inhibierung von Hartwasserbestandteilen der beschriebenen Propfpolymere fehlen vergleichbare Daten. Da aber beide Eigenschaften die Waschwirkung wesentlich beeinflussen, dürften die Polymere nach DE 40 03 172 A1 auch darin besser sein.

Der vorliegenden Erfindung liegt daher die Aufgabe zugrunde, in einem einfachen technischen Verfahren unter Vermeidung decarboxylierender Monomerer Pfropfcopolymere mit Polyhydroxyverbindungen herzustellen, die ein verbessertes hydrophiles Suspendiervermögen aufweisen, die eine erhöhte Effizienz bezüglich der mehrwertigen Metallionen komplexierenden Eigenschaften besitzen, sowie gute Inhibitoren für Wasserhärte sind und dispergierende Eigenschaften für Stoffe in wässrigen Systemen haben.

Diese Aufgabe wird erfindungsgemäß gelöst durch wasserlösliche Pfropfcopolymerisate aus Polyhydroxyverbindungen, deren Reaktionsprodukten und/oder deren Derivaten, ausgenommen Mono- und Disaccharide sowie Oligosaccharide mit einem mittleren Polymerisationsgrad von 1,1 bis 20, Sorbit, Weinsäure und Gluconsäure, und einer Monomermischung, erhältlich durch radikalische Pfropfcopolymerisation einer Monomermischung aus
A) 45 - 96 Gew.% wenigstens einer monoethylenisch ungesättigten C₃-C₁₀-Monocarbonsäure und/oder wenigstens einem Salz einer solchen Monocarbonsäure mit einem einwertigen Kation,
B) 4 - 55 Gew.% wenigstens eines monoethylenisch ungesättigten sulfonsäuregruppenhaltiger Monomeren, eines monoethylenisch ungesättigten Schwefelsäureesters und/oder Vinylphosphonsäure und/oder einem Salz dieser Säuren mit einwertigen Kationen,
C) 0 - 30 Gew.% wenigstens einer wasserlöslichen, monoethylenisch ungesättigten Verbindung, die mit 2 - 50 Mol Alkylenoxid pro Mol modifiziert ist,
D) 0 - 45 Gew.% wenigstens eines weiteren wasserlöslichen, radikalisch polymerisierbaren Monomeren,
E) 0 - 30 Gew.% in Wasser wenig bzw. unlöslicher, radikalisch polymerisierbarer Monomerer;
die in der Summe aus A bis E 100 Gew.% beträgt, unter Vermeidung decarboxylierender Monomerer, in Gegenwart von Polyhydroxyverbindungen und/oder deren Reaktionsprodukten und/oder deren Derivaten und/oder deren Mischungen, wobei der Gehalt der Polyhydroxyverbindungen und/oder deren Derivate und/oder deren Reaktionsprodukte in der Gesamtmischung 1 - 60 Gew.% beträgt, vorzugsweise 5 - 40 Gew.% und bevorzugt 5 - 30 Gew.% beträgt.

Polyhydroxyverbindungen sind erfindungsgemäß mono-, di-, oligo- und polymere Glycerine bzw. deren Gemische, teil- und vollverseifte Polyvinylalkohole, die aus Polyvinylestern bzw. Polyvinylethern bzw. aus Vinylether- bzw. Vinylestercopolymeren durch Verseifung oder Hydrolyse entstanden sind, sowie Polysaccharide pflanzlichen, tierischen, mikrobiellen oder synthetischen Ursprungs. Als Polysaccharide seien beispielhaft Stärke, Cellulose, Johannisbrotkernmehl, Dextran, Guargummi, Xanthan, Xylan, Pektin, Algin und Chitin sowie synthetische Polydextrose genannt. Aus komerziellen Gründen ist der Einsatz von Stärke und Cellulose bevorzugt. Wegen der verbesserten Löslichleit werden weiterhin bevorzugt modifizierte Polysaccharide eingesetzt, d.h. entweder durch thermische, mechanische, enzymatische, oxidative oder säurekatalytische Einwirkung im Molekulargewicht veränderte Polysaccharide (Reaktionsprodukte) bzw. durch chemische Modifizierung, wie Veresterung, Veretherung, Hydrierung und Umglykosidierung zu Derivaten veränderte Polysaccharide verwendet. Beispielhaft hierfür seien Weiß- und Gelbdextine, Maltodextrine, oxidierte und säureabgebaute Stärken, Carboxymethylstärke, Dialdehydstärke, kationische, anionische und neutrale Ether und Ester der Cellulose und Stärke genannt. Ausgenommen werden Zucker und Zukkerderivate sowie Oligosaccharide mit einem mittleren Polymerisationsgrad von 1,1 bis 20, wie sie in der noch nicht veröffentlichten deutschen Patentanmeldung P 42 21 381 beschrieben werden. Weiterhin können als Polyhydroxyverbindungen erfindungsgemäß auch Mischungen der genannten Polyhydroxyverbindungen mit Mono- oder Oligosacchariden und deren Derivaten verwendet werden.

Ebenso ist es möglich, daß die erfindungsgemäßen Polymerisate Derivate mit Polyhydroxyverbindungen enthalten, die aus den genannten Polyhydroxyverbindungen und anderen Komponenten der Monomerenmischung im Verlauf des Herstellungsprozesses gebildet werden.

Weitere, vorteilhaft zu verwendende Derivate von Polyhydroxyverbindungen sind Zuckersäuren wie z. B. Glucarsäure, Ascorbinsäure oder andere Polyhydroxycarbonsäuren wie etwa Dimethylhydroxypropionsäure, sowie Ester von Carbonsäuren bzw. Hydroxycarbonsäuren, wie z. B. Citronensäureester von Polyglycerin, Zuckeralkoholen, Zuckercarbonsäuren, Mono- und Oligosaccariden, hydrierten und/oder chemisch modifizierten Mono- und Oligosacchariden, Aminozuckern, Triethanolamin, Trishydroxyethylmelamin.

Als Polyhydroxyverbindungen sind weiterhin verwendbar Mono- oder Difettsäureester von Polyhydroxyverbindungen, wie Glycerin, Polyglycerin, von Derivaten von hydrierten Zuckern, Anhydroverbindungen, beispielsweise Sorbitan oder Anhydrosorbit. Beispielhaft seien Sorbitanmonooleat, Sorbitanpalmitat, Sobitanstearat bzw. -isostearat, Sorbitanlaurat, Sorbitansesquioleat, Polyoxiethylenoleat, Polyoxyethylen und Polyoxypropylensorbitol und Triglycerinmonolaurat und Triglycerinstearat genannt.

Oftmals ist es von Vorteil, Polysaccharide mit einer kombinierten Modifizierung aus Molekulargewichtsabbau und chemischer Modifizierung einzusetzen, oder aber auch Mischungen verschiedener Polyhydroxyverbindungen zu verwenden.

Für die unter A) genannten monoethylenisch ungesättigten C3- bis C10-Monocarbonsäuren kommen Acrylsäure, Vinylessigsäure, 3-Vinylpropionsäure, Methacrylsäure, Crotonsäure, Dimethacrylsäure, 2-Pentensäure, 3-Hexensäure und 2-Hexensäure, deren Alkali- und/oder Ammonium- und/oder Aminsalze sowie entsprechende Mischungen in Frage. Bevorzugt sind Methacrylsäure, Acrylsäure und Vinylessigsäure, besonders bevorzugt sind Acrylsäure und Methacrylsäure.

Bei den in der Gruppe B) genannten sulfonsäurehaltigen Monomeren und monoethylenisch ungesättigten Schwefelsäureestern sind insbesondere Vinyl-, Allyl- und Methallylsulfonsäure und Acrylamidomethylpropansulfonsäure, Styrolsulfonsäure sowie Schwefelsäureester des Hydroxyethyl(meth)acrylats oder von olefinisch ungesättigten Alkoholen, wie z.B. Allyl- und Methallylsulfat und/oder deren Alkali- und/oder Ammonium- und/oder Aminsalze bevorzugt.

Die unter C) genannten Monomere sind Polyglykolether und Polyglykolester und/oder Ester von (Meth)Acrylsäure und (Meth)Allylalkohol, die gegebenenfalls endverschlossen sein können, beispielhaft seien hier ein mit 10 Mol Äthylenoxid verätherter Allylalkohol und ein Methoxypoly(ethylenglykol)methacrylat mit 20 Ethylenoxideinheiten genannt.

Die unter D) genannten Monomere haben aufgrund ihrer Funktionalität einen das Molekulargewicht erhöhenden Charakter, was durch einen höheren Polymerisationsgrad bzw. durch Verzweigungen und Vernetzungen erreicht wird. Geeignet sind somit gut polymerisierbare Monomere und solche mit zwei oder mehreren ethylenischen Doppelbindungen, die als bifunktionelle Vernetzer wirken oder auch Monomere mit einer ethylenisch ungesättigten Doppelbindung und einer anderen funktionellen Gruppe. Beispiele hierfür sind Acrylamid, Allylmethacrylat und Glycidylmethacrylat.
Als Monomere nach E) kommen beispielsweise Alkyl- und/oder Hydroxyalkyl(meth)acrylsäureester, Maleinsäuremono- und -dialkylester sowie N-Alkyl- und N,N-Dialkyl-(meth) acrylamide und Vinylcarbonsäureester in Frage, z.B. Methyl-, Ethyl- und Butyl(meth)acrylate, die entsprechenden Hydroxyethyl-, -propyl-, -butyl-(meth)acrylate, N-Methyl-, N-Dimethyl-, N-tert.-Butyl- und N-Octadecylacrylamid sowie Maleinsäuremono- und -diethylester sowie Vinylacetat und Vinylpropionat, sofern die damit hergestellten Copolymere wasserlöslich sind.

Erfindungsgemäß bevorzugt zu verwendende Polyhydroxyverbindungen bzw. Monomeren sind in den Ansprüchen 2 bis 9 angegeben.

Die erfindungsgemäßen Polymere können nach an sich bekannten Polymerisationsmethoden in Lösung oder Suspension erhalten werden.
Vorzugsweise wird die Polymerisation der Monomeren in wässriger Lösung durchgeführt. Die Initiierung der Polymerisation erfolgt mit Hilfe von in Radikale zerfallende Polymerisationsinitiatoren. Verwendet werden können Redoxsysteme und thermisch zerfallende Radikalbildner bzw. Kombinationen daraus, aber auch durch Strahlen initiierbare Katalysatorsysteme.

Als Initiatoren eignen sich vor allem Peroxide, wobei Wasserstoffperoxid, t-Butylhydroperoxid, Peroxodisulfate bzw. deren Kombination bevorzugt sind. Die Initiatoren werden kombiniert mit an sich bekannten Reduktionsmitteln, wie z.B. Natriumsulfit, Hydrazin, Schwermetallsalzen u.a.. Das Initiatorsystem kann je nach Durchführung der Polymerisation kontinuierlich dosiert oder in Portionen oder bei wechselnden pH-Werten zugefügt werden. Die Molekulargewichte können in bekannter Weise durch Regler, wie z.B. Mercaptoverbindungen, beeinflußt werden.

Es wird daher beansprucht :
- Ein Verfahren zur Herstellung der erfindungsgemäßen Pfropfcopolymerisate aus Polyhydroxyverbindungen, deren Reaktionsprodukten und/oder deren Derivaten und monoethylenisch ungesättigten Monomeren in Lösung oder Suspension bei Temperaturen bis 200 °C mittels radikalischer Polymerisationsinitiatoren, dadurch gekennzeichnet, daß eine Gesamtmischung aus 1 - 60 Gew%, bevorzugt 5 - 40 Gew.% und insbesondere bevorzugt 5 - 30 Gew.% Polyhydroxyverbindungen, deren Reaktionsprodukten und/oder deren Derivaten und 95 - 40 Gew% einer Monomermischung aus
   A) 45 - 96 Gew% wenigstens einer monoethylenisch ungesättigten C3-C10-Monocarbonsäure oder deren Salzen mit einwertigen Kationen,
   B) 4 - 55 Gew% wenigstens eines monoethylenisch ungesättigten sulfonsäuregruppenhaltigen Monomeren, eines monoethylenisch ungesättigten Schwefelsäureesters und/oder Vinylphosphonsäure und/oder den Salzen dieser Säuren mit einwertigen Kationen,
   C) 0 - 30 Gew% wenigstens einer wasserlöslichen monoethylenisch ungesättigten Verbindung, die mit 2 - 50 Mol Alkylenoxid pro Mol modifiziert wurde,
   D) 0 - 45 Gew% wenigstens eines weiteren wasserlöslichen radikalisch polymerisierbarer Monomeren,
   E) 0 - 30 Gew% anderer in Wasser wenig bzw. unlöslicher, radikalisch polymerisierbarer Monomerer,
   die in der Summe aus A bis E 100 % beträgt, eingesetzt wird und daß die Bestandteile der Gesamtmischung aus Polyhydroxykomponenten und monoethylenisch ungesättigten Monomeren zur Polymerisation entweder insgesamt oder lediglich in Teilen vorgelegt und der Rest dosiert oder alle Bestandteile dosiert werden.
- Ein Verfahren zur Herstellung der erfindungsgemäßen Pfropfcopolymerisate aus Polyhydroxyverbindungen, deren Reaktionsprodukten und/oder deren Derivaten und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Polysaccharide, bevorzugt Stärke, Stärkeabbauprodukte und Stärkederivate, Cellulose, Celluloseabbauprodukte und/oder Cellulose derivate verwendet werden.
- Ein Verfahren zur Herstellung der erfindungsgemäßen Pfropfcopolymerisate aus Polyhydroxyverbindungen, deren Reaktionsprodukten, deren Derivaten oder deren Mischungen und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Polyvinylalkohol und/oder teilverseifte Polyvinylacetate und/oder teilhydrolisierte Polyvinylether verwendet werden.
- Ein Verfahren zur Herstellung der erfindungsgemäßen Pfropfcopolymerisate aus Polyhydroxyverbindungen, deren Reaktionsprodukten, deren Derivaten oder deren Mischungen und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Glycerin und/oder Polyglycerine, insbesondere Diglycerin, Triglycerin und Monoisopropylidendiglycerin oder Monoisopropylidentriglycerin verwendet werden.

Die Pfropfcopolymerisation kann unter adiabatischen oder isothermen Bedingungen durchgeführt werden, wobei die Reaktion beispielsweise so geführt werden kann, daß man einen Teil des Monomerengemisches vorlegt, die Polymerisation startet und dann die Monomerenmischung zudosiert. Die Polyhydroxykomponente wird entweder komplett in die Vorlage gegeben oder zusammen mit der Monomerenmischung dosiert oder aber nur zu einem Teil vorgelegt und zum anderen Teil dosiert. Bei der Copolymerisation kann die Temperatur in einem weiten Bereich schwanken. Dieser Bereich liegt zwischen 0°C und 200°C. Je nach den zu verwendenden Initiatoren können Temperaturen zwischen 10°C und 150°C, vorzugsweise zwischen 20°C und 120°C optimal sein. Möglich ist es, die Polymerisation am Siedepunkt des Lösungsmittels bei reduziertem oder erhöhtem Druck durchzuführen.

Bevorzugt wird die Polymerisation unter adiabatischen Bedingungen durchgeführt. Der Polymerisationsstart erfolgt dann zweckmäßig bei niedrigen Temperaturen, z.B. bei 25°C. Die durch die freiwerdende Polymerisationswärme erreichte Endtemperatur hängt von den eingesetzten Monomeren und Konzentrationsverhältnissen ab und kann bei einem entsprechenden Druck beispielsweise bis 180°C betragen.

Während der Copolymerisation kann der pH-Wert der Reaktionsmischung in einem weiten Bereich schwanken. Vorteilhaft wird die Copolymerisation bei niedrigen pH-Werten durchgeführt, etwa in der Art, daß die eingesetzte Acrylsäure nicht oder nur teilweise vorneutralisiert wird und man gegebenenfalls erst gegen Ende der Polymerisation neutral (pH 7 - 8) einstellt. Im Falle der Verwendung von Polysacchariden kann es bei der abschließenden Neutralisation zu Verfärbungen des Polymerisates kommen, die sich durch eine Neutralisation der sauren Monomeren vor der Polymerisation verhindern lassen. Es ist jedoch immer darauf zu achten, daß durch die pH-Werteinstellung das Copolymerisationsverhalten der Monomeren gewährleistet ist. Die erfindungsgemäßen Pfropfcopolymerisate können in kontinuierlicher und diskontinuierlicher Verfahrensweise hergestellt werden.

In den folgenden Beispielen werden Herstellung und Eigenschaften der erfindungsgemäßen Pfropfcopolymerisate erläutert. Es wird insbesondere gezeigt, daß die erfindungsgemäßen Polymerisate gegenüber dem Stand der Technik sowohl ein überlegenes hydrophiles Suspendiervermögen als auch ein erhöhtes Bindevermögen für mehrwertige Kationen aufweisen und darüber hinaus eine starke Verzögerung der Ausfällung unlöslicher Calcium- und Magnesiumsalze bewirken.

Die erfindungsgemäßen Pfropfcopolymerisate können als Dispergier- und Komplexiermittel eingesetzt werden. Mit ihnen werden mehrwertige Metallionen in wasserlöslichen Komplexen gebunden. Sie dienen zur Inhibierung von Wasserhärte. Sie sind Hilfsmittel und Komponente in Wasch- und Reinigungsmitteln sowie in Wasch- und Färbeflotten, wobei sie im besonderen als Cobuilder hervorragend geeignet sind.

Die erfindungsgemäßen Pfropfcopolymerisate sind gut biologisch abbaubar und können sehr gut in Textilwaschmitteln, Geschirrspülmitteln, Kalk- und Kesselsteinentfernern, Wasserbehandlungsmitteln und Textilhilfsmitteln verwendet werden. Die Pfropfcopolymerisate können dabei in wäßriger Lösung, als Pulver oder als Granulat eingesetzt werden.

In der folgenden Tabelle wird angegeben, in welchen Mengen (als Gewichtsprozente) die Pfropfcopolymerisate im allgemeinen in Wasch- und Reinigungsmitteln eingesetzt werden.

| | |
|---|---|
| Pulverwaschmittel (Textilien) | 3 bis 30 % |
| Wasserenthärter | 5 bis 30 % |
| Reinigungsmittel /z.B. Haushaltsreiniger) | 1 bis 5 % |
| Geschirreiniger (maschinell) | 5 bis 25 % |

Dabei können beispielhaft folgende Rezepturen für Wasch- und Reinigungsmittel angegeben werden:

| **Pulverwaschmittel** | **A** | **B** |
|---|---|---|
| Alkylbenzolsulfonat, Na-Salz | 8 % | 6% |
| Fettalkoholethoxylat | 5 % | 5% |
| Seife | 3 % | 5% |
| Zeolith A | 25 % | |
| Natriumcarbonat | 15 % | 25% |
| Natriummetasilikat | 5 % | 5% |
| Magnesiumsilikat | 1% | - |
| Natriumperborat | 20 % | 15% |
| Pfropfcopolymerisate | 5 % | 10% |
| Natriumsulfat, Wasser u.a. | ad 100 % | ad 100% |
| | | |

| **Geschirreiniger (maschinell)** | | |
|---|---|---|
| Tensid, schaumarm | 2 % | |
| Natriummetasilikat | 50 % | |
| Natriumcarbonat | 5 % | |
| Pfropfcopolymerisate | 5 % | |
| Natriumsulfat | ad 100% | |
| | | |

| **Klarspüler** | | |
|---|---|---|
| Tensid, schaumarm | 10 % | |
| Pfropfcopolymerisate | 5 % | |
| Isopropanol | 10 % | |
| Cumolsulfonat | 2 % | |
| Wasser | ad 100 % | |
| | | |

| **Geschirrspülmittel (manuell)** | | |
|---|---|---|
| Paraffinsulfonat, Na-Salz | 20 % | |
| Fettalkoholethersulfat, Na-Salz | 5 % | |
| Betain | 3 % | |
| Pfropfcopolymerisate | 2 % | |
| Wasser | ad 100 % | |
| | | |

| **Allzweckreiniger** | | |
|---|---|---|
| Paraffinsulfonat, Na-Salz | 5 % | |
| Fettalkoholethoxylat | 5 % | |
| Isopropanol | 5 % | |
| Pfropfcopolymerisate | 1 - 3 % | |
| Wasser | ad 100 % | |
| | | |

| **Toilettenreinigungsmittel** | | |
|---|---|---|
| Fettalkoholsulfat | 25% | |
| Pulverseife | 5% | |
| Fettalkoholethoxylat | 20% | |
| Pfropfcopolymerisate | 3% | |
| Natriumbicarbonat | 20% | |
| Parfümöl | 5% | |
| Natriumsulfat | ad 100% | |

Die erfindungsgemäßen Polymerisate sind als Hilfsmittel bei der Veredlung von Textilien oder Textilmaterialien vorteilhaft verwendbar. So beim Abkochen bzw. Beuchen von Baumwolle unter Bindung der Härtebildner und unter Dipergierung der Baumwollbegleitsubstanzen bzw. Verunreinigungen, deren Wiederaufziehen verhindert wird und indem sie die Wirkung von Tensiden unterstützen. Die erfindungsgemäßen Polymerisate werden als Stabilisatoren beim Bleichen mit Wasserstoffperoxid eingesetzt; bei der zusätzlicher Verwendung von stabilisierenden Silikaten verhindern sie Silikatabscheidungen.

Die erfindungsgemäßen Polymerisate sind auch als Hilfsmittel in Wasch- und Färbeflotten kontinuierlicher und diskontinuierlicher Art anwendbar, wobei der unfixierte Farbstoff entfernt wird und gute Wasch-, Wasser- und Reibechtheiten erreicht werden. Im Falle von Polyesterfasern wird zusätzlich die Abtrennung von sich herauslösenden und den Färbeprozess störenden oligomeren Polyesterbestandteilen durch die dispergierende Wirkung der Polymeren erreicht.

Die erfindungsgemäßen Polymerisate fördern beim Färben von Zellulosefasern die Löslichkeit von Reaktiv- und Direktfarbstoffen und bewirken eine verbesserte Egalität des Farbstoffes auf der Faser, insbesondere bei Anwesenheit hoher Salzmengen in der Flotte. Sie können als Mittel zum Anteigen der Farbstoffe in der Küpenfärberei oder als Dispergatoren im Pigmentierungsbad vorteilhaft eingesetzt werden. Bei Schwefelfärbungen unterstützen sie die Feinverteilung der Farbstoffe und verhindern das Bronzieren.

Beim Färben von Synthesefasern wird durch die erfindungsgemäßen Polymerisate die Bildung von Agglomeraten aus Dispersionsfarbstoffen verhindert, so daß Ablagerungen in den Wickelkörpern vermieden werden.

Bei der Nachwäsche von Echtfärbungen und Drucken werden durch die erfindungsgemäßen Polymerisate nicht fixierte Farbstoffanteile gebunden und das Wiederaufziehen wird drastisch reduziert. Durch die erhöhte Diffusion der Farbstoffe zur Waschflotte wird durch die Polymerisate eine optimale Entfernung unfixierter Farbstoffe unter Einsparung von Wasser und Energie erreicht.
Die erfindungsgemäßen Produkte stellen so beim Nachbehandeln von Naphtholfärbungen einen wirkungsvollen Ersatz für Polyphosphate dar, bei der Nachwäsche von Reaktivdrucken werden Ausfällungen von Calciumalginat verhindert.

Die dispergierende und komplexbildende Wirkung der erfindungsgemäßen Polymerisate erfolgt dabei ohne Remobilisierung von Schwermetallverbindungen, sowohl aus Farbstoffchromophoren (Reaktiv-, Metallkomplexfarbstoffen) als auch aus an sich wasserunlöslichen, natürlichen oder industriell verursachten Ablagerungen.

Die Einsatzmengen können in der Praxis gegenüber herkömmlichen Hilfsmitteln, wie Polyacrylaten bis um das 3- bis 5-fache reduziert werden.

Die erfindungsgemäßen Polymerisate können in Kombination mit Tensiden, insbesondere anionischen Tensiden, in unneutralisierter Form (als saure Einstellung) in Kombination mit komplexierend wirkenden organischen Säuren, wie Citronensäure, Milchsäure, Gluconsäure und Phosphonsäuren und Tensiden, insbesondere anionischen Tensiden eingesetzt werden.

Derartige Kombinationen werden beispielsweise vorteilhaft anstelle der bisher üblichen mehrstufigen, in jeweils separaten Bädern erfolgenden Vorbehandlung, beispielsweise von hochbelasteter Baumwolle oder Baumwollelinters, mit den Stufen saure Extraktion, Choritbleiche, Abkochen und H₂O₂-Bleiche, in der Weise vorgenommen, daß die Vorbehandlung in nur einem veränderbaren Behandlungsbad unter Zusatz der erfindungsgemäßen Polymerisate erfolgt.

Diese erfindungsgemäße Verfahrensweise läßt sich auch auf Continue-Prozesse übertragen. Die genannten Verfahrensweisen vermeiden die Bildung von unerwünschten organischen Halogenverbindungen und entsprechende Umweltbelastungen.

Die Polymerisate eignen sich als Zusätze zum Entschlichten von wasserhärteempfindlichen Faserschlichten, z.B. Polyesterschlichten.

Bei der Lederherstellung bewirken die erfindungsgemäßen Polymerisate während der Chromgerbung eine erhöhte Chromaufnahme durch das Leder und in der Nachgerbung füllende und weichmachende Eigenschaften des Leders.

Aufgrund der dispergierenden und schwermetallkomplexierenden aber nicht remobilisierenden Eigenschaften eignen sich die erfindungsgemäßen Polymerisate weiterhin in vorteilhafter Weise als Hilfsmittel bei der Papierherstellung, beispielsweise beim Bleichen von Zellstoff und anderen Fasermaterialien, zur Herstellung von Dispersionen von Pigmenten und Füllstoffen, wie Kaolin, Calciumcarbonat, Satinweiß, Talkum, Titandioxid, Aluminiumhydroxid und Bariumsulfat, sowie zur Herstellung von Streichfarben, wobei Füllstoff- und Pigmentslurries und Streichfarben mit hohem Feststoffgehalt und hoher Lagerstabilität erhalten werden.
Die erfindungsgemäßen Polymeren können in Kombination mit anderen Hilfsmitteln eingesetzt werden.

Aufgrund der hohen Effizienz der erfindunggemäßen Polymerisate, aus der sich niedrige Einsatzkonzentrationen in der Anwendung ergeben, und der guten biologischen Abbaubarkeit weisen die Produkte eine hohe ökologische Akzeptanz auf. Bevorzugte Anwendungen der erfindungsgemäßen Pfropfcopolymerisate finden sich als Hilfsmittel bei der Vorbehandlung von Faserrohstoffen oder Textilmaterialien, zum Abkochen, Beuchen und Bleichen von Faserrohstoffen, Fasern und Textilmaterialien, beim Färben von natürlichen und/oder synthetischen Fasern oder Textilmaterialien, beim Textildruck, insbesondere bei der Nachwäsche von Reaktivdrucken und Echtfärbungen von natürlichen und/oder synthetischen Fasern oder Textilmaterialien, beim Entschlichten von natürlichen oder synthetischen Fasern oder Textilmaterialien, bei der Papierherstellung zur Herstellung von Pigment- und Füllstoffdispersionen sowie von Streichfarben und bei der Lederherstellung. Außerdem finden sie Anwendung in der Herstellung von Pigment und Farbstoffdispersionen. Bevorzugte Anwendungen finden sich in den abhängigen Verwendungsansprüchen.

Die in den folgenden Beispielen und Vergleichsbeispielen ausgeführten Polymerisationsreaktionen wurden im 2-Liter-Reaktionskolben mit Rührer, Rückflußkühler, Thermometer und Dosiereinrichtungen für flüssige und gasförmige Stoffe durchgeführt.

### Beispiel 1

248,9 g Acrylsäure, 133,2 g dest. Wasser, 64,0 g 50%ige Natronlauge, 64,5 g Natriummethallylsulfonat, 201,8 g einer 25%igen wässrigen Lösung von MOWIOL 5-88 (Polyvinylalkohol der Fa. HOECHST) und 107,6 g einer 60%igen wässrigen Lösung von Methoxypolyethylenglykolmethacrylat (20 mol EO) werden im Polymerisationsreaktor vermischt und auf 15°C abgekühlt. Die Polymerisation wird durch Zugabe von 20 mg Eisen-II-sulfat, gelöst in 17,8 g dest. Wasser, 4,0 g Natriumdisulfit und 5 g tert.-Butylhydroperoxid (70%ig), gelöst in 17.8 g dest. Wasser, gestartet. Die Temperatur steigt innerhalb von 2 Minauten auf 65°C, dann wird mittels eines Heizbades auf 75° erhöht und über 1,5 Stunden mit der Dosierung eines zweiten Initiatorsystems aus den Komponenten 17 g t-Butylhydroperoxid (70%ig) gelöst in 66,7 g dest. Wasser und 10 g Natriumdisulfit gelöst in 66,7 g dest. Wasser begonnen. Nach Ablauf der Dosierung wurde noch 30 Minuten nachgerührt, abgekühlt und mit 163,6 g 50%iger Natronlauge neutralisiert. Das Polymerisat hat eine Trockensubstanz von 43,1% und ist von trübem Aussehen, die Trübung ist im Zustand stabil und verschwindet beim Verdünnen. Der Restgehalt an Acrylsäure beträgt 20 ppm, der an Methallylsulfonat 0,2%, das Molekulargewichtsmittel beträgt Mw = 29 128.

### Beispiel 2

212,1 g Acrylsäure, 200,0 g dest. Wasser, 75,0 g Natriummethallylsulfonat, 54,5 g 50%ige Natronlauge und 150,0 g Triglycerin werden im Polymerisationsreaktor vorgelegt und bei 24°C mit 5,9 Mercaptoethanol, 26 mg Eisen-II-sulfat, gelöst in 10 g dest.

Wasser, und 4 g Wasserstoffperoxid(35%ig), gelöst in 10 g dest. Wasser versetzt. Die Polymerisation setzt spontan ein und erreicht nach 4 Minuten 101°C, um dann wieder abzufallen. Ab 75°C wird über 1,5 Stunden ein zweites Initiatorsystem bestehend aus 10,7 g Natriumpersulfat, gelöst in 50 g dest. Wasser und 10,7 g Natriumdisulfit, gelöst in 50 g Wasser zudosiert. Nach dem Ende der Dosierung wird 30 Minuten nachgerührt, abgekühlt und mit 139,4 g 50%iger Natronlauge neutralisiert. Das farblose, klare Endprodukt hat einen pH-Wert von 5,8 und einen Trockensubstanzgehalt von 52,8 %, der Restgehalt an Acrylsäure beträgt 15 ppm, das Molekulargewichtsmittel beträgt Mw = 5 907.

### Beispiel 3

Hier wird bis auf die Initiatoren das Beispiel 2 wiederholt. Der Polymerisationsstart wird durch 20 mg Eisen-II-sulfat, gelöst in 10 g dest. Wasser, 3 g Natriumdisulfit und 4 g t-Butylhydroperoxid(30%ig), gelöst in 10 g dest Wasser ausgelöst, wobei die Temperatur von 20°C auf 98°C ansteigt. Die analog zu Beispiel 1 durchzuführende zweite Initiierung besteht aus 12 g t-Butylhydroperoxid(70%ig), gelöst in 50 g dest. Wasser und 9 g Natriumdisulfit, gelöst in 50 g dest. Wasser.
Das Endprodukt ist eine klare, farblose Lösung mit einem Trockensubstanzgehalt von 51,4 % und einem Restgehalt an Acrylsäure von 10 ppm, das Molekulargewichtsmittel beträgt Mw = 11 480.

### Beispiel 4

Hier wird das Beispiel 1 mit der Änderung wiederholt, daß die Polyvinylalkohollösung gegen 50,4 g Triglycerin ausgetauscht werden und die Wassermenge auf 284,6 g erhöht wird.
Das klare, farblose Endprodukt hat einen Trockensubstanzgehalt von 43,2%, einen Restgehalt an Acrylsäure von < 10ppm und an Methallylsulfonat von 0,16%. Das Molekulargewichtsmittel beträgt Mw = 23 540.

### Beispiel 5

In Abänderung zum Beispiel 4 wurde die Menge an Triglycerin auf 194,6 g erhöht und die Initiierung wie folgt durch geführt: Polymerisationsstart mit 10 g Mercaptoethanol, 30mg Eisen-II-sulfat und 6 g Natriumdisulfit, gelöst in 17,8 g dest. Wasser und 8 g t-Butylhydroperoxid(70%ig), gelöst in 17,8 g dest. Wasser. Die analog zu Beispiel 1 durchzuführende zweite Initiierung wurde mit 14 g Natriumpersulfat, gelöst in 66 g dest. Wasser und 10 g Natriumdisulfit, gelöst in 66 g dest. Wasser durchgeführt.
Das klare, farblose Endprodukt hat einen Trockensubstanzgehalt von 50,3 %, einen Restgehalt an Acrylsäure von 10 ppm und an Methallylsulfonat von 0,3%, das Molekulargewichtsmittel beträgt Mw = 3 470.

### Beispiel 6

Hier wird in Abänderung zu Beispiel 3 das Triglycerin durch 150,8 g des Stärkedextrins Maltodextrin MD 20 (Fa. AVEBE) ersetzt und die Initierung zum Polymerisationsstart erfolgt, nach Zugabe von 10 g Mercaptoethanol, mit 20 mg Eisen-II-sulfat und 3 g Natriumdisulfit, gelöst in 10 g dest. Wasser und 4 g t-Butylhydroperoxid(70%ig), gelöst in 10 g dest. Wasser. In der analog zu Beispiel 1 durchzuführenden zweiten Initiierung werden 10 g Natriumpersulfat und 10 g Natriumdisulfit, jeweils gelöst in 50 g dest. Wasser eingesetzt.
Das Endprodukt ist eine klare Lösung mit einem Trockensubstanzgehalt von 54,7 % und einem Restgehalt an Acrylsäure von < 20 ppm. Das Molekulargewichtsmittel beträgt Mw = 2 996.

### Beispiel 7

212,1 g Acrylsäure, 284 g dest. Wasser, 54,5 g 50%ige Natronlauge, 194,6 g Maltodextrin MD 20 (Stärkedextrin der Fa. AVEBE) und 75 g Natriummethallylsulfonat werden miteinander gelöst und bei 15°C mit 20 mg Eisen-II-sulfat und 4 g Natriumdisulfit, gelöst in 17,8 g dest. Wasser, sowie 5 g t-Butylhydroperoxid(70%ig), gelöst in 17,8 g dest. Wasser versetzt. Die Temperatur steigt innerhalb von 4 Minuten auf 70°C, dann wird mit der Dosierung der zweiten Initiierung, bestehend aus den Lösungen von 14 g Natriumpersulfat und 10 g Natriumdisulfit in jeweils 66 g dest. Wasser, über 1,5 Stunden begonnen. Danach wird 30 Minuten nachgerührt und nach dem Abkühlen mit Natronlauge neutralisiert. Das leicht trübe Polymerisat hat einen Trockensubstanzgehalt von 49,9 %, einen Restgehalt an Acrylsäure von < 20 ppm und an Methallylsulfonat von 0,18%. Das Molekulargewichtsmittel beträgt Mw = 26 225.

### Beispiel 8

Hier wird das Beispiel 3 mit der Änderung wiederholt, daß zusätzlich 2 g Allylglycidylether in der Rezeptur eingesetzt werden und das in der analog zu Beispiel 1 durchzuführenden zweiten Initiierungsstufe 12g Natriumpersulfat und 10 g Natriumdisulfit, jeweils in 50 g dest. Wasser gelöst,Verwendung finden.
Das farblose, klare Polymerisat hat einen Trockensubstanzgehalt von 52,8 % und einen Restgehalt an Acrylsäure von < 20 ppm, das Molekulargewichtsmittel beträgt Mw = 14872.

### Vergleichsbeispiel 1 (nach DE 37 14 732 C2, Beispiel 2)

108 g Acrylsäure werden mit 300 g 20%iger Natronlauge neutralisiert. 91 g Glucose werden in 100 g Wasser gelöst und mit 49 g 35%iger H2O2-Lösung vermischt. 100 g Wasser werden im Reaktionsgefäß auf 85 °C erhitzt, und dann läßt man über 90 Minuten die Acrylsäure- und Glucoselösung zulaufen, der pH-Wert wird bei 9,0 gehalten. 10 Minuten nach Abschluß der Dosierung steigt die Temperatur im Reaktionsgefäß plötzlich auf 103 °C an, und das Polymerisat verfärbt sich gelb. Anschließend wird abgekühlt. Die Polymerlösung hat einen Feststoffgehalt von 30,6 % und eine Viskosität von 220 mPa.s. Durch Zugabe von Salzsäure läßt sich das Polymer in Form eines schleimigen Niederschlags ausfällen, der schwierig abtrennbar ist.

### Vergleichsbeispiel 2 (nach DE 40 03 172 A1, Beispiel 21)

243 g Wasser, 160 g Saccharose, 47,9 g Maleinsäureanhydrid, 0,57 g phosphorige Säure und 2 g Natriumhydrogensulfit werden im Reaktionsgefäß vorgelegt und im Stickstoffstrom 1 Stunde bei 80 °C gerührt. Dann fügt man zur Vorlage langsam 70,5 g 50%ige Natronlauge zu und dosiert innerhalb von 5 Stunden bei 80 °C eine Lösung von 133,6 g Acrylsäure in 141,9 g Wasser und innerhalb von 6 Stunden Lösungen von 8,1 g 35%igen Wasserstoffperoxid in 37,6 g Wasser und 2,85 g Natriumsulfat in 40 g Wasser gleichmäßig dazu. Anschließend wird der Ansatz noch 2 Stunden nacherhitzt. Die Polymerlösung hat einen Feststoffgehalt von 37,7 % und eine Viskosität von 155 mPa.s.

### Vergleichsbeispiel 3 (nach DE 40 03 172 A1, Beispiel 25)

290 g Maltodextrin MD 14 (Dextroseäquivalentwert 14, Fa. Avebe), 470 g Wasser, 4,2 ml 0,1%ige wäßrige Lösung von Eisen-II-ammoniumsulfat, 101,4 g Maleinsäureanhydrid und 74,5 g Natriumhydroxid werden im Reaktionsgefäß vorgelegt und zum Sieden erhitzt. Nach Siedebeginn dosiert man innerhalb von 5 Stunden eine Mischung aus 120 g Acrylsäure und 132,7 g einer 50%igen wäßrigen Lösung des Natriumsalzes der Acrylamidomethylpropansulfonsäure und innerhalb von 6 Stunden 80 g 30%iges Wasserstoffperoxid und eine Lösung von 24 g Natriumpersulfat in 72 g Wasser und hält dabei die Temperatur am Siedepunkt des Gemisches. Nach Ende der letzten Initiatordosierung wird 1 h nacherhitzt. Dann wird mit 155 g 50%iger Natronlauge neutralisiert. Man erhält eine trübe braune Lösung mit einem Feststoffgehalt von 45,2 % und einer Viskosität von 560 mPa.s. Innerhalb von 14 Tagen hat sich aus der trüben Lösung ein Niederschlag abgesetzt.

### Beispiel 9 - Bestimmung der Beständigkeit gegenüber hartem Wasser

Zu einem Prüfwasser von 33,6 °dH (reine Calciumhärte) wird eine bestimmte Menge 10%iger PfropfcopolymerLösung gegeben, 5 Minuten auf einer Heizplatte gekocht und anschließend optisch bezüglich Klarheit, Opaleszenz und Trübung beurteilt. Durch Variation der Menge an Pfropfcopolymer wird die Konzentration an Gramm Produkt (Trockensubstanz) pro Liter Hartwasser ermittelt, bei der nach vorhergehender Trübung/Opaleszenz erstmals eine klare Lösung auftritt.

Die in Tabelle 1 dargestellten Ergebnisse machen deutlich, daß mit den erfindungsgemäßen Polymerisaten eine wirksame und verbesserte Inhibierung von Kesselstein oder ähnlichen Ablagerungen bzw. Ausfällungen von Bestandteilen des Hartwassers erreicht werden kann.

**Tabelle 1**

| Produkt Beispiel | Hartwasserbeständigkeit, klar bei (g T.S. /l) |
|---|---|
| 1 | 0,5 |
| 2 | 2,5 |
| 3 | 2,5 |
| 4 | 0,5 |
| 5 | 0,5 |
| 7 | 0,5 |
| 8 | 2,0 |
| Vergleichsbeispiel 1 | >3,0 |
| Vergleichsbeispiel 2 | 3,0 |

### Beispiel 10 - Bestimmung des Calciumbindevermögens

Das Calciumbindevermögen wird nach dem sog. Hampshire-Test durchgeführt, bei dem man das Polymer in Gegenwart von Carbonationen mit Calciumacetatlösung titriert. Der Endwert der Titration wird in mg CaCO₃/g Polymer angegeben.

Durchführung: 1 g Komplexbildner (erfindungsgemäßes Polymerisat oder Vergleichsprodukt) wird in 50 ml dest. Wasser gelöst, mit Natronlauge neutralisiert, mit 10 ml 2%iger Natriumcarbonatlösung versetzt, auf 100 ml aufgefüllt und der pH-Wert auf 11,0 eingestellt. Die Titration erfolgt mit 0,25 m Calciumacetatlösung bis zum Auftreten einer andauernden deutlichen Trübung/Fällung. Die Vorstufe zur Trübung macht sich in einer leichten Opaleszenz bemerkbar, der Übergang ist je nach Komplexbildner schmal oder breit. Einige der erfindungsgemäßen Polymerisate haben eine so hohe Komplexierfähigkeit, daß außer einer Opaleszenz keine weitere Trübung auftritt

**Tabelle 2**

| Produkt Beispiel Nr. | Calciumbindevermögen nach Hampshire (mg CaCO₃/g Polymer) |
|---|---|
| 1 | 1600 |
| 3 | 1184 |
| 5 | >1600 |
| 6 | 1374 |
| 7 | >1600 |
| Polyacrylsäure | 710 |
| Maleinsäure/Acrylsäure-Copolymer (30/70Gew.%) | 625 |
| Vergleichsbeisp. 1 | 299 |
| Vergleichsbeisp. 2 | 697 |

Die erfindungsgemäßen Polymerisate zeigen sehr hohe Werte für das Calciumbindevermögen. Durch Mitverwendung von Maleinsäureanhydrid (Vergleichsbeispiele 2 und 4) bzw. durch das Fehlen von Sulfonsäuregruppen enthaltendem Monomer (Vergleichsbeispiel 1) entstehen Polymerisate mit schlechterem Bindevermögen für Calcium.

### Beispiel 11 - Bestimmung des hydrophilen Suspendiervermögens

Das Schmutztragevermögen von Waschmittelbuildern kann durch die Bestimmung des hydrophilen Suspendiervermögens charakterisiert werden. dabei wird als Maß für das Schmutztragevermögen das Suspendiervermögen gegenüber pulverisiertem Eisenoxid angesehen. Die Bestimmung des Suspendiervermögens erfolgt durch photometrische Trübungsmessung einer Suspension, die aus der Prüfsubstanz, einem Eisenoxidpigment und dem Tensid MARLON A (Alkylbenzolsulfonat) besteht. In einem Schüttelzylinder wird das Eisenoxid in einer wäßrigen Lösung der Testsubstanz unter Zusatz von MARLON A intensiv geschüttelt und nach 24 Stunden die Stärke der dann noch zu beobachtenden Trübung photometrisch bestimmt. Gemessen wird die Extinktion E₄₅₀ bei 450 nm in einer 1 cm-Küvette.
Die ermittelten Extinktionswerte stellen Maßzahlen für das hydrophile Suspendiervermögen dar. Produkte mit hoher Suspendieraktivität stabilisieren die Pigmente in der wäßrigen Phase und weisen hohe Extinktionswerte auf.

**Tabelle 3**

| Polymer nach Beispiel | Extinktion E₄₅₀ |
|---|---|
| 2 | 150 |
| 3 | 60 |
| 5 | 160 |
| 6 | 170 |
| Natriumtripolyphosphat | 140 |
| Handelsprodukt* aus Maleinsäure/Acrylsäure (30/70Gew.%) | 6 |

| | |
|---|---|
| * Sokalan CP5 (BASF AG) | |

### Beispiel 12 - Inkrustierverhalten bei einem Waschversuch

In einer Haushaltswaschmaschine wurde Baumwollgewebe mit einer Waschpulverformulierung gewaschen, die 10 Gew.% Polymertrockensubstanz als Builder enthält Nach 12 Wäschen bei 90°C mit Wasser von 13°dH wurde der Restaschegehalt des Gewebes ermittelt. Als Vergleichspolymer wurde ein Handelsprodukt aus Maleinsäure/Acrylsäure (30/70Gew.%) herangezogen. Die Vergrauungsinhibierung wurde in einer Linitest-Laborwaschmaschine ermittelt.

| Waschpulverzusammensetzung: | |
|---|---|
| Alkylbenzolsulfonat | 6% |
| Fettalkoholethoxylat | 5% |
| Pulverseife | 5% |
| Natriumcarbonat | 25% |
| Natriumbicarbonat | 25% |
| Natriumperborat | 15% |
| Polymer (100% Feststoff) | 10% |
| Natriumsulfat | ad 100% |

**Tabelle 4**

| Polymer | % Restasche | %Aufhellung |
|---|---|---|
| Beispiel 3 | 0,68 | 79 |
| Beispiel 5 | 0,64 | |
| Handelsprodukt | 0,85 | 76 |

### Beispiel 13 - Wäsche von Färbungen

Hier wird die Verwendung der erfindungsgemäßen Polymerisate am Beispiel einer diskontinuierlichen Wäsche nach einer Reaktivfärbung an einem Baumwollgewebe beschrieben.

Zunächst läßt man die Farbflotte ab und dann wird
1. im Überlauf 10 min bei 60 °C gespült
2. auf frischem Bad bei 90 °C 10 min gespült
3. mit 1 g/l Polymerisat nach Beispiel 5 10 min bei 90 - 95 °C belassen 15 min bei 45 °C gespült.

Das Baumwollgewebe ist intensiv gefärbt, frei von Ausblutungen und hat eine gute Waschechtheit.

Die oben angegebenen Zeiten, Temperaturen und Reihenfolgen sind beispielhaft. Der Einsatz der erfindungsgemäßen Polymerisate kann auch unter anderen Waschverfahrensbedingungen erfolgen.

### Beispiel 14 - Verhalten der Dispergiermittel in stark alkalischer Flotte

Prüflösungen (500 ml Flotte) aus Wasser mit 24°dH, und 10g/l NaOH und dem erfindungsgemäßen Polymerisat werden auf Kochtemperatur erhitzt, 15 Minuten bei dieser Temperatur gehalten und dann abgekühlt. Das Flottendefizit wird durch Wasserzusatz (20°dH) ausgeglichen.

Die Tabelle 6 gibt das Aussehen der Lösungen in Abhängigkeit von der Einsatzmenge verglichen mit den Handelsprodukten I, II und III an:
I: Sequion MC 200, Alkyl-Phosphonat, Handelsprodukt der Firma Bozzetto, Italien
II: Varsaquest DC-N, Polyacrylat, Handelsprodukt der Fa. DeJonge, Belgien
III: LAVORAL S 313, Natriumsalz einer Polyacrylsäure, Handelsprodukt der Fa. Che. Fabrik Stockhausen GmbH, Krefeld, Deutschland

**Tabelle 5**

| Einsatzmenge | 0,5 g/l | 1 g/l | 2 g/l | 3 g/l |
|---|---|---|---|---|
| Produkt | | | | |
| Produkt I | Ausflockung | Ausflockung | Ausflockung | klar |
| Produkt II | Ausflockung | Ausflockung | opal-klar | klar |
| Produkt III | opal-trüb | klar | klar | klar |
| Polymerisat nach | | | | |
| Beisp.5 | opal-trüb | klar | klar | klar |

Klare Lösungen werden erhalten bei Einsatzmengen ab
3 g/l mit I
2 g/l mit II
1 g/l mit III
1 g/l Polymerisat nach Beispiel 5

### Beispiel 15

Rohbaumwollstränge werden bei einem Flottenverhältnis von 1 : 10 mit 5 ml Essigsäure 30 Minuten abgekocht. 200 ml der Flotte werden anschließend auf 60°C abgekühlt und mit jeweils
0,5 g/l, 1,0 g/l und 2 g/l des Polymerisats nach Beispiel 5
0,05 g/l Indanthrenblau BC Coll
20,0 ml/l NaOH 50 %ig und
5,0 g/l Hydrosulfit konz.
versetzt.

Nach einer Verweilzeit von 15 Minuten (bei 60°C) wurde die Flotte jeweils durch ein Blaubandfilter abgesaugt.
Die Polymerisate zeigen eine gute Dispergierwirkung und verhindern bei den verwendeten Einsatzkonzentrationen die Abscheidung von Ausflockungen.

### Beispiel 16

Schwarzgefärbte PES-Flocke wurde bei einem Flottenverhältnis von 1 : 20 mit einer Flotte von 1 g/l Polymerisat nach Beispiel 5 und 1 g/l SOLOPOL DP (Fettaminethoxylat, Handelsbezeichnung der Firma Chemische Fabrik Stockhausen GmbH, Krefeld) 20 Minuten bei 70° - 80°C behandelt und dann heiß und kalt gespült. Oligomere, Farb- und Faserstaub werden von den Fasern entfernt.

### Beispiel 17

Eine Bleiche von 100 % Baumwollelinters mit einem Weißgrad von 29,5 (nach Elrepho) wurde in einem Bad mit einem Flottenverhältnis von jeweils 1 : 20 mit folgenden Behandlungsstufen durchgeführt:
**1. Stufe** Behandlung mit einer Flotte aus
   1 ml/l HCI konz. (37 %ig)
   2 ml/l einer Kombination enthaltend
      42,0 Teile des erfindungsgemäßen Polymerisats nach Beispiel 5, in saurer Endeinstellung
      10,0 Teile Milchsäure
      25,0 Teile Gluconsäure
      4,0 Teile Phosphonsäure
      14,0 Teile eines C12-C18 Fettalkoholpolyglycolethersulfats und
      5,0 Teilen eines schaumdämpfenden EO-PO-Blockpolimerisats
      erfolgte innerhalb von 30 Minuten bei 25°C
**2. Stufe** A) Behandlung mit einer Flotte aus
   10 ml/l NaOH, 50 %ig
   2 g/l Lavoral S313 (Polyacrylsäure, Handelsprodukt der Chemischen
   Fabrik Stockhausen GmbH)
   45 Minuten bei 95°C
B) Behandlung mit einer Flotte aus
   10 ml/l NaOH 50 %ig
   2 g/l der Kombination nach Stufe 1
   45 Minuten bei 95°C
C) Behandlung mit einer Flotte aus
   10 ml/l NaOH 50 %ig
   2 g/l des erfindungsgemäßen Polymerisats nach Beispiel 5
   erfolgte innerhalb von 45 Minuten bei 95°C
**3. Stufe** Behandlung mit einer Flotte aus
   3 ml/l der Kombination nach Stufe 1 und
   8 ml/l Wasserstoffperoxid 35 %ig
   erfolgte innerhalb von 45 Minuten bei 95°C

   Das Wasserstoffperoxid wird zuvor in einer Lösung aus der Kombination nach Stufe 1 und einer Teilmenge des Wasser verdünnt und erhitzt langsam zugesetzt.

Die Flotte wird abgelassen und das Material unter Zusatz von 2 ml/l Polymerisat nach Beispiel 5 bei 80°C heiß gespült.
Der Weißgrad von mehreren Proben lag zwischen 69 und 70%.

### Beispiel 18:

Zu einer Mischung aus 334,6 g dest. Wasser, 248,9 g Acrylsäure, 50,4 g Weinsäure, 64,5 g Natriummethallylsulfonat und 107,6 g Methoxypolyethylenglykolmethacrylat (20 Mol EO)(60%ige Lösung in Wasser) werden bei 10°C 20 mg Eisen(II)sulfat und 4 g Natriumdisulfit sowie 5 g t-Butylhydroperoxid (70%ig), jeweils gelöst in 17,8 g Wasser, zugegeben. Die Temperatur erhöht sich durch die einsetzende Polymerisationsreaktion auf 53°C und wird dann durch ein Heizbad auf 70°C gesteigert, worauf innerhalb 1 h zwei Lösungen aus 14 g Natriumpersulfat und 10 g Natriumdisulfit in jeweils 50 g Wasser zugetropft werden. Am Ende wird das Polymerisat mit 50%iger Natronlauge neutralisiert. Die klare Polymerlösung hat einen Trockensubstanzgehalt von 42,2 % und eine Viskosität von 720 mPas.

### Beispiel 19:

In Abänderung zu Beispiel 4 wurden anstelle von Triglycerin 56,1 g Natriumgluconat eingesetzt, sowie die Wassermenge auf 334,6 g erhöht. Die Initiierung der Polymerisation erfolgte bei 15°C durch die Zugabe von 20 mg Eisen(II)sulfat, 4 g Natriumdisulfit und 5 g t-Butylhydroperoxid (70%ig), jeweils gelöst in 17,8 g dest. Wasser. Nach Erreichen von 62°C wird die Temperatur mittels eines Heizbades auf 73°C erhöht und mit der Dosierung von 17 g t-Butylhydroperoxid (70%ig) und 10 g Natriumdisulfit, jeweils gelöst in 50 g Wasser, über eine Stunde begonnen. Nach Abschluß der Polymerisation wird mit 50%iger Natronlauge neutralisiert. Das Endprodukt ist eine klare Lösung mit 42,8% Trockensubstanz und die Hartwasserbeständigkeit beträgt 0,5 g TS/l.

### Beispiel 20:

In Abänderung von Beispiel 19 werden anstelle von 56,1 g Natriumgluconat 50 g eines Citronensäureesters von Polyglycerin eingesetzt. Der Citronensäureester wurde durch direkte Kondensation von 0,3 Mol Polyglycerin mit 1,5 Mol Citronensäure (entsprechend der PCT/EP 92/00512, Seite 12, Bsp. 1) hergestellt, wobei entstehendes Kondensationswasser durch azeotrope Destillation entfernt wurde.

### Beispiel 21:

In Abänderung von Beispiel 4 wurde das Triglycerin durch Glycerin ersetzt. Die Polymerisationsinitiierung erfolgte nach Zusatz von 10 g Mercaptoethanol und 30 mg Eisen(II)sulfat bei 15 °C durch 8 g t-Butylhydroperoxid (70%ig) und 6 g Natriumdisulfit, jeweils gelöst in 17,8 g Wasser. Nach einem Temperaturanstieg auf 100°C läßt man auf 78°C abkühlen und dosiert dann über 1 Stunde zwei Lösungen von 17 g t-Butylhydroperoxid(70%ig) und 10 g Natriumdisulfit, jeweils gelöst in 66 g Wasser. Nach dem Abkühlen wird mit 50%iger Natronlauge neutralisiert. Das Endprodukt ist eine klare Lösung mit 44,1% Trockensubstanz und einer Hartwasserbeständigkeit von 0,5 g TS/l.

### Beispiel 22:

In Abänderung von Beispiel 21 wurde die Gewichtsmenge Natriummethallylsulfonat durch Acrylamidopropansulfonsäure ersetzt und die Menge Mercaptoethanol auf 2 g reduziert. Die Polymerisationsinitiierung erfolgte mit 20 mg Eisen(II)sulfat, 4g Natriumdisulfit und 5g t-Butylhydroperoxid(70%ig).
Das Endprodukt war eine klare Lösung mit 42,5% TS und einer Hartwasserbeständigkeit von 0,5 g TS/l.

### Beispiel 23 :

180 g dest. Wasser, 124,4 g Acrylsäure, 32g 50%ige Natronlauge, 303,5 g 41%ige Acrylamidlösung, 64,5 g Natriummethallylsulfonat, 46,2 g Glycerin und 107,5 g einer 60%igen Lösung von Methoxypolyethylenglykolmethacrylat(20Mol EO) werden miteinander gelöst und dann mit 20 mg Eisen(II)sulfat und 4 g Natriumdisulfit, gelöst in 17,8 g Wasser sowie 5 g t-Butylhydroperoxid(70%ig), gelöst in 17,8 g Wasser versetzt. Die Temperatur steigt von 15°C auf 100°C an, um dann wieder abzufallen. Ab 75°C werden über 1 Stunde 17 g t-Butylhydroperoxid(70%ig) und 10 g Natriumdisulfit, jeweils gelöst in 50 g Wasser zudosiert. Nach dem Ende der Polymerisation wird mit Natronlauge neutralisiert. Das Polymerisat hat eine Trockensubstanz von 42,1 %, eine Viskosität von 280 mPas und eine Hartwasserbeständigkeit von 0,5 g TS/l.

### Beispiel 24:

In 281 g dest. Wasser werden250,2 g Acrylsäure, 64,3 g Natronlauge (50%ig), 88,5 g Natriummethallylsulfonat und 176,9 g Glycerin gelöst und mit 6,95 g Mercaptoethanol, 0,0312 Eisen-II-sulfat versetzt. Es wird eine Temperatur von 18°C eingestellt und die Polymerisation durch Zugabe von 4,72 g Wasserstoffperoxid (35%ig) gestartet. Nach 10 Minuten erreicht man mit 96°C das Temperaturmaximum und läßt danach auf 75°C abkühlen, um dann bei dieser Temperatur die Dosierung zweier Lösungen aus 12,6 g Natriumpersulfat in 59 g Wasser und 2,5 g Natriumdisulfit in 59 g Wasser über 1 Stunde durchzuführen. Zum Abschluß wird abgekühlt und mit 163,3 g Natronlauge (50%ig) neutralisiert.Das Polymerisat ist von heller Farbe, hat einen Trockensubstanzgehalt von 46,2 %, einen pH-Wert von 5,7 und eine Viskosität von 240 mPas.

### Beispiel 25:

Hier wurde ein Polymerisat aus 50 Gew. % Natriumacrylat, 15 Gew. % Natriummethallylsulfonat, 5 Gew. % Methoxypolyethylenglykolmethacrylat und 30 Gew. % Glycerin hergestellt. Die farblose, klare, wäßrige Polymerisatlösung hatte einen Trockensubstanzgehalt von 45,8 %, eine Viskosität von 133 mPas und einen pH-Wert von 5,5.

### Beispiel 26:

Hier wurde ein Polymerisat aus 76,1 Gew. % Acrylsäure, 15,7 Gew. % Natriummethallylsulfonat und 8,2 Gew. % Glycerin aufgebaut. Die wäßrige, farblose und klare Polymerisatlösung hatte einen pH-Wert von 5,5, einen Trockensubstanzgehlat von 42,8 % und eine Viskosität von 117 mPas.

### Beispiel 27 - Peroxidstabilisierung in Bleichflotten

In diesem Versuch soll die Stabilisierungswirkung von Sequestriermitteln gegenüber der Flotte getestet werden. Der Flotte werden die einer Durchschnittsbaumwolle entsprechenden Mengen an Mineralien zugesetzt und eine Sequestriermittel, bzw. ein Komplexbildner.Die Bleichflotte wurde mit folgenden Zusätzen in Weichwasser angesetzt:
1,0 g/l Netzmittel (Mischung aus Isotrideylalkoholethoxylat und Alkansulfonat)
0,2 g/l Magnesiumchlorid
1,0 g/l Stabilisator
4,0 ml/l Natronlauge (50%ig)
8,0 ml/l Wasserstoffperoxid (35%ig)

Der Restperoxidgehalt wird nach bestimmten, in der folgenden Tabelle angegebenen Zeiten/Temperaturen permanganometrisch bestimmt. Verglichen werden Ansätze mit Stabilisatoren aus erfindungsgemäßem Polymerisat nach Beispiel 1, mit Wasserglas (als Stand der Technik) und eine Blindprobe ohne Stabilisator. Man erkennt die gute, Peroxid stabilisierende Eigenschaft des erfindungsgemäßen Polymerisats:

| Zeit (Min) | Temperatur (°C) | Restperoxidgehalt der Flotte (%) | | |
|---|---|---|---|---|
| | | Natriumwasserglas | Bsp.1 | Blindversuch |
| 0 | 20 | 100 | 100 | 100 |
| 20 | 70 | 48,8 | 80,3 | 59,1 |
| 40 | 98 | 3,0 | 13,2 | 7,1 |
| 55 | 98 | 0,8 | 1,8 | 0,8 |
| 70 | 98 | 0,5 | 1,0 | 0,0 |

### Beispiel 28 - Chromauszehrung bei der Lederherstellung

Bei der Chromgerbung werden Chromsalze in Gegenwart von Polymeren auf dem Leder fixiert. Der Erfolg der Chromgerbung bestätigt sich in einer möglichst hohen Chromaufnahme durch das Leder und einer möglichst hohen Schrumpftemperatur des Leders. Die Chromaufnahme des Leders wird indirekt durch das in der Flotte zurückbleibende Chromsalz bestimmt und mit dem Begriff Auszehrung benannt. Als Schrumpftemperatur bezeichnet man die Temperatur, bei der das Leder zu schrumpfen beginnt. In der folgenden Tabelle sind die Chromgehalte der Gerbflotte, die daraus berechnete Auszehrung und die Schrumpftemperatur angegeben. Vergleichsbasis ist ein handelsübliches Acrylsäure/DIMAPA-Copolymer:

| Polymer | Chromgehalt der Flotte (g Cr2O3/l) | | Auszehrung (%) | Schrumpftemp. (°C) |
|---|---|---|---|---|
| | n. 3 hr | Vers.-Ende | | |
| Handelspr. | 2,28 | 0,81 | 64,5 | 95 |
| Beisp. 24 | 3,19 | 0,61 | 80,9 | 95 |
| Beisp. 2 | 2,84 | 0,61 | 78,5 | 94 |
| Beisp. 26 | 2,77 | 0,40 | 85,4 | 94 |

Durch die erfindungsgemäßen Polymerisate wird eine sehr hoher Anteil Chromsalz aus der Flotte im Leder fixiert, die Chromauszehrung ist als sehr gut zu bezeichnen

### Beispiel 29 - Nachgerbung von Leder

Bei der Nachgerbung von Leder werden Eigenschaften wie Weichheit, Narbenfestigkeit und Egalität beeinflußt. In der folgenden Tabelle sind die Ergebnisse eines Nachgerbversuches mit erfindungsgemäßen Polymeren und dem Handelsprodukt aus Beispiel 28 als Vergleich aufgeführt. Verwendet wurden Rindhäute (wet blue, 1,8-1,0 Falzstärke). Die Beurteilung der Versuchsergebnisse geht von 1 bis 5, wobei 1 den besten Wert darstellt.

| Polymer | Weichheit | Narbenfestigkeit | Egalität |
|---|---|---|---|
| Handelspr. | 3-4 | 2 | 3 |
| Beisp. 26 | 3-4 | 2 | 3 |
| Beisp. 2 | 4 | 2 | 3-4 |

## Patentansprüche

1. Wasserlösliche Pfropfcopolymerisate aus Polyhydroxyverbindungen, deren Reaktionsprodukten und/oder deren Derivaten, ausgenommen Mono- und Disaccharide sowie Oligosaccharide mit einem mittleren Polymerisationsgrad von 1,1 bis 20, Sorbit, Weinsäure und Gluconsäure, und einer Monomermischung, erhältlich durch radikalische Pfropfcopolymerisation einer Monomermischung aus
A) 45 - 96 Gew.% wenigstens einer monoethylenisch ungesättigten C₃-C₁₀-Monocarbonsäure und/oder wenigstens einem Salz einer solchen Monocarbonsäure mit einem einwertigen Kation,
B) 4 - 55 Gew.% wenigstens eines monoethylenisch ungesättigten sulfonsäuregruppenhaltiger Monomeren, eines monoethylenisch ungesättigten Schwefelsäureesters und/oder Vinylphosphonsäure und/oder einem Salz dieser Säuren mit einwertigen Kationen,
C) 0 - 30 Gew.% wenigstens einer wasserlöslichen, monoethylenisch ungesättigten Verbindung, die mit 2 - 50 Mol Alkylenoxid pro Mol modifiziert ist,
D) 0 - 45 Gew.% wenigstens eines weiteren wasserlöslichen, radikalisch polymerisierbaren Monomeren,
E) 0 - 30 Gew.% in Wasser wenig bzw. unlöslicher, radikalisch polymerisierbarer Monomerer;
die in der Summe aus A bis E 100 Gew.% beträgt, unter Vermeidung decarboxylierender Monomerer, in Gegenwart von Polyhydroxyverbindungen und/oder deren Reaktionsprodukten und/oder deren Derivaten und/oder deren Mischungen, wobei der Gehalt der Polyhydroxyverbindungen und/oder deren Derivate und/oder deren Reaktionsprodukte in der Gesamtmischung 1 - 60 Gew.% beträgt, vorzugsweise 5 - 40 Gew.% und bevorzugt 5 - 30 Gew.% beträgt.

2. Pfropfcopolymerisate nach Anspruch 1, dadurch gekennzeichnet, daß sie als Polyhydroxyverbindungen Polysaccharide, bevorzugt Stärke, Stärkeabbauprodukte und Stärkederivate, Cellulose, Celluloseabbauprodukte und/oder Cellulosederivate enthalten.

3. Pfropfcopolymerisate nach Anspruch 1, dadurch gekennzeichnet, daß sie als Polyhydroxyverbindungen Polyvinylalkohol und/oder teilverseifte Polyvinylacetate und/oder teilhydrolisierte Polyvinylether enthalten.

4. Pfropfcopolymerisate nach Anspruch 1, dadurch gekennzeichnet, daß sie als Polyhydroxyverbindungen Glycerin und/oder Polyglycerine, insbesondere Diglycerin, Triglycerin und Monoisopropylidendiglycerin oder Monoisopropylidentriglycerin enthalten.

5. Pfropfcopolymerisate nach Anspruch 1, dadurch gekennzeichnet, daß sie als Monomere A Acryl- und/oder Methacrylsäure, deren Alkali/Ammonium- und/oder Aminsalze enthalten.

6. Pfropfcopolymerisate nach Anspruch 1, dadurch gekennzeichnet, daß sie als Monomere B Allylsulfonsäure, Methallylsulfonsäure, Acrylamidomethylpropansulfonsäure, Vinylsulfonsäure, Sulfatoethyl(meth)acrylat, Vinylphosphonsäure und/oder die Salze dieser Säuren mit einwertigen Kationen enthalten.

7. Pfropfcopolymerisate nach Anspruch 1, dadurch gekennzeichnet, daß sie als wasserlösliche monoethylenisch ungesättigte, mit Alkylenoxid modifizierte Verbindungen Allylalkohol oder die Ester von ungesättigten Carbonsäuren wie Acrylsäure oder Methacrylsäure enthalten, deren Alkoholkomponente mit Alkylenoxid modifiziert ist.

8. Pfropfcopolymerisate nach Anspruch 1, dadurch gekennzeichnet, daß sie als Monomer D molekulargewichtserhöhend wirkende Monomere, bevorzugt solche mit mehrfach monoethylenisch ungesättigten Doppelbindungen und/oder mit einer ethylenisch ungesättigten Doppelbindung und einer weiteren funktionellen vernetzend wirkenden Gruppe enthalten.

9. Pfropfcopolymerisate nach Anspruch 1, dadurch gekennzeichnet, daß sie als Monomer E Alkyl-und/oder Hydroxyalkyl(meth)acrylsäureester, Maleinsäuremono- und/oder -dialkylester, N-Alkyl und/oder N,N-Dialkyl(meth)acrylamide und/oder Vinylcarbonsäureester enthalten.

10. Verfahren zur Herstellung von Pfropfcopolymerisaten nach Ansprüchen 1 - 9 aus Polyhydroxyverbindungen, deren Reaktionsprodukten und/oder deren Derivaten und monoethylenisch ungesättigten Monomeren in Lösung oder Suspension bei Temperaturen bis 200 °C mittels radikalischer Polymerisationsinitiatoren, dadurch gekennzeichnet, daß eine Gesamtmischung aus 1 - 60 Gew%, bevorzugt 5 - 40 Gew.% und insbesondere bevorzugt 5 - 30 Gew.% Polyhydroxyverbindungen, deren Reaktionsprodukten und/oder deren Derivaten und 95 - 40 Gew% einer Monomermischung aus
A) 45 - 96 Gew% wenigstens einer monoethylenisch ungesättigten C3-C10-Monocarbonsäure oder deren Salzen mit einwertigen Kationen,
B) 4 - 55 Gew% wenigstens eines monoethylenisch ungesättigten sulfonsäuregruppenhaltigen Monomeren, eines monoethylenisch ungesättigten Schwefelsäureesters und/oder Vinylphosphonsäure und/oder den Salzen dieser Säuren mit einwertigen Kationen,
C) 0 - 30 Gew% wenigstens einer wasserlöslichen monoethylenisch ungesättigten Verbindung, die mit 2 - 50 Mol Alkylenoxid pro Mol modifiziert wurde,
D) 0 - 45 Gew% wenigstens eines weiteren wasserlöslichen radikalisch polymerisierbarer Monomeren,
E) 0 - 30 Gew% anderer in Wasser wenig bzw. unlöslicher, radikalisch polymerisierbarer Monomerer,
die in der Summe aus A bis E 100 % beträgt, eingesetzt wird und daß die Bestandteile der Gesamtmischung aus Polyhydroxykomponenten und monoethylenisch ungesättigten Monomeren zur Polymerisation entweder insgesamt oder lediglich in Teilen vorgelegt und der Rest dosiert oder alle Bestandteile dosiert werden.

11. Verfahren zur Herstellung von Pfropfcopolymerisaten nach Ansprüchen 1 - 9 aus Polyhydroxyverbindungen, deren Reaktionsprodukten und/oder deren Derivaten und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Polysaccharide, bevorzugt Stärke, Stärkeabbauprodukte und Stärkederivate, Cellulose, Celluloseabbauprodukte und/oder Cellulosederivate verwendet werden.

12. Verfahren zur Herstellung von Pfropfcopolymerisaten nach Ansprüchen 1 - 9 aus Polyhydroxyverbindungen, deren Reaktionsprodukten, deren Derivaten oder deren Mischungen und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Polyvinylalkohol und/oder teilverseifte Polyvinylacetate und/oder teilhydrolisierte Polyvinylether verwendet werden.

13. Verfahren zur Herstellung von Pfropfcopolymerisaten nach Ansprüchen 1 - 9 aus Polyhydroxyverbindungen, deren Reaktionsprodukten, deren Derivaten oder deren Mischungen und monoethylenisch ungesättigten Monomeren in Lösung oder Suspension bei Temperaturen bis 200 °C mittels radikalischer Polymerisationsinitiatoren, dadurch gekennzeichnet, daß als Polyhydroxyverbindungen Glycerin und/oder Polyglycerine, insbesondere Diglycerin, Triglycerin und Monoisopropylidendiglycerin oder Monoisopropylidentriglycerin verwendet werden.

14. Verwendung der Pfropfcopolymerisate nach den Ansprüchen 1 - 9 zur Bindung von mehrwertigen Metallionen.

15. Verwendung der Pfropfcopolymerisate nach den Ansprüchen 1 - 9 zur Inhibierung der Wasserhärte.

16. Verwendung der Pfropfcopolymerisate nach den Ansprüchen 1 - 9 als Zusatz und Komponente in Wasch- und Reinigungsmitteln.

17. Verwendung der Pfropfcopolymerisate nach den Ansprüchen 1 - 9 als Zusatz und Komponente in Waschflotten.

18. Verwendung der Pfropfcopolymerisate nach den Ansprüchen 1 - 9 als Hilfsmittel bei der Textilveredlung.

19. Verwendung der Pfropfcopolymerisate nach den Ansprüchen 1 - 9 als Hilfsmittel bei der Vorbehandlung von Faserrohstoffen oder Textilmaterialien.

20. Verwendung der Pfropfcopolymerisate nach den Ansprüchen 1 - 9 als Hilfsmittel zum Abkochen, Beuchen und Bleichen von Faserrohstoffen, Fasern und Textilmaterialien.

21. Verwendung der Pfropfcopolymerisate nach den Ansprüchen 1 - 9 als Hilfsmittel beim Färben von natürlichen und/oder synthetischen Fasern oder Textilmaterialien.

22. Verwendung der Pfropfcopolymerisate nach den Ansprüchen 1 - 9 als Hilfsmittel beim Textildruck, insbesondere bei der Nachwäsche von Reaktivdrucken und Echtfärbungen von natürlichen und/oder synthetischen Fasern oder Textilmaterialien.

23. Verwendung der Pfropfcopolymerisate nach den Ansprüchen 1 - 9 als Hilfsmittel beim Entschlichten von natürlichen oder synthetischen Fasern oder Textilmaterialien.

24. Verwendung der Pfropfcopolymerisate nach den Ansprüchen 1 - 9 als Hilfsmittel nach den Ansprüchen 18 - 23 dadurch gekennzeichnet, daß sie in Kombination mit Tensiden, insbesondere anionischen Tensiden eingesetzt werden.

25. Verwendung der Pfropfcopolymerisate nach den Ansprüchen 1 - 9 als Hilfsmittel nach den Ansprüchen 18 - 24 dadurch gekennzeichnet, daß sie in Kombination mit komplexbildenden Carbonsäuren eingesetzt werden.

26. Verwendung der Pfropfcopolymerisate nach den Ansprüchen 1 - 9 als Hilfsmittel nach den Ansprüchen 19 und 20, 24 und 25 dadurch gekennzeichnet, daß sie zum chloritfreien Bleichen, vorzugsweise in mehrstufigen Verfahren in einem veränderbaren Behandlungsbad oder in solchen Continue-Prozessen eingesetzt werden.

27. Verwendung der Pfropfcopolymerisate nach den Ansprüchen 1 - 9 zur Herstellung von Pigment- und Farbstoffdispersionen.

28. Verwendung der Pfropfcopolymerisate nach den Ansprüchen 1 - 9 als Hilfsmittel bei der Papierherstellung zur Herstellung von Pigment- und Füllstoffdispersionen sowie von Streichfarben.

29. Verwendung der Pfropfcopolymerisate nach den Ansprüchen 1 - 9 als Hilfsmittel bei der Lederherstellung.

## Claims

1. Water-soluble graft copolymers of polyhydroxy compounds, the reaction products and/or derivatives thereof, with the exception of mono- and disaccharides and oligosaccharides having an average degree of polymerization of from 1.1 to 20, sorbitol, tartaric acid, and gluconic acid, and a monomer mixture, which copolymers may be obtained by free-radical graft copolymerization of a monomer mixture of
A) 45-96 wt.-% of at least one monoethylenically unsaturated C₃-C₁₀ monocarboxylic acid and/or at least one salt of such a monocarboxylic acid with an univalent cation;
B) 4-55 wt.-% of at least one monoethylenically unsaturated monomer containing sulfonic acid groups, a monoethylenically unsaturated sulfuric acid ester and/or vinylphosphonic acid and/or a salt of these acids with univalent cations;
C) 0-30 wt.-% of at least one water-soluble, monoethylenically unsaturated compound modified with 2-50 mol alkylene oxide per mole;
D) 0-45 wt.-% of at least one other water-soluble monomer polymerizable via free radicals;
E) 0-30 wt.-% monomers polymerizable via free radicals which are sparingly or insoluble in water; wherein the sum of A through E is 100 wt.-%;
avoiding decarboxylating monomers, in the presence of polyhydroxy compounds and/or reaction products and/or derivatives and/or mixtures thereof, the content of said polyhydroxy compounds and/or their derivatives and/or reaction products in the overall mixture being 1-60 wt.-%, preferably 5-40 wt.-%, more preferably 5-30 wt.-%.

2. The graft copolymers of claim 1, characterized in that they contain polysaccharides, preferably starch, starch degradation products and starch derivatives, cellulose, cellulose degradation products and/or cellulose derivatives as polyhydroxy compounds.

3. The graft copolymers of claim 1, characterized in that they contain poly(vinyl alcohol) and/or partially saponified poly(vinyl acetates) and/or partially hydrolyzed poly(vinyl ethers) as polyhydroxy compounds.

4. The graft copolymers of claim 1, characterized in that they contain glycerol and/or polyglycerols, particularly diglycerol, triglycerol, and monoisopropylidene diglycerol, or monoisopropylidene triglycerol as polyhydroxy compounds.

5. The graft copolymers of claim 1, characterized in that they contain acrylic and/or methacrylic acid, the alkali/ammonium and/or amine salts thereof as monomers A.

6. The graft copolymers of claim 1, characterized in that they contain allylsulfonic acid, methallylsulfonic acid, acrylamidomethylpropanesulfonic acid, vinylsulfonic acid, sulfatoethyl (meth)acrylate, vinylphosphonic acid, and/or salts of these acids with univalent cations as monomers B.

7. The graft copolymers of claim 1, characterized in that they contain allyl alcohol or esters of unsaturated carboxylic acids such as acrylic acid or methacrylic acid wherein the alcohol component is modified with alkylene oxide as water-soluble, monoethylenically unsaturated compounds modified with alkylene oxide.

8. The graft copolymers of claim 1, characterized in that they contain monomers as monomer D, which result in an increase of the molecular weight, preferably those having multiple monoethylenically unsaturated double bonds and/or one ethylenically unsaturated double bond and another functional group having a crosslinking effect.

9. The graft copolymers of claim 1, characterized in that they contain alkyl and/or hydroxyalkyl (meth)acrylic acid esters, maleic acid mono- and/or dialkyl esters, N-alkyl- and/or N,N-dialkyl(meth)acrylamides, and/or vinylcarboxylic acid esters as monomer E.

10. A process for producing the graft copolymers according to claims 1-9 from polyhydroxy compounds, the reaction products and/or derivatives thereof and monoethylenically unsaturated monomers in solution or suspension at temperatures up to 200°C using free-radical polymerization initiators, characterized in that an overall mixture of 1-60 wt.-%, preferably 5-40 wt.-%, and more preferably 5-30 wt.-% of polyhydroxy compounds, the reaction products and/or derivatives thereof, and 95-40 wt.-% of a monomer mixture of
A) 45-96 wt.-% of at least one monoethylenically unsaturated C₃-C₁₀ monocarboxylic acid or salts thereof with univalent cations;
B) 4-55 wt.-% of at least one monoethylenically unsaturated monomer containing sulfonic acid groups, a monoethylenically unsaturated sulfuric acid ester and/or vinylphosphonic acid and/or salts of these acids with univalent cations;
C) 0-30 wt.-% of at least one water-soluble, monoethylenically unsaturated compound modified with 2-50 mol alkylene oxide per mole;
D) 0-45 wt.-% of at least one other water-soluble monomer polymerizable via free radicals;
E) 0-30 wt.-% of other monomers polymerizable via free radicals, which are sparingly or insoluble in water;
wherein the sum of A through E is 100%, is employed, and that the components of the overall mixture of polyhydroxy components and monoethylenically unsaturated monomers either are precharged altogether or merely in parts and the remainder is metered, or all the components are metered for polymerization.

11. A process for producing the graft copolymers according to claims 1-9 from polyhydroxy compounds, the reaction products and/or derivatives thereof and monoethylenically unsaturated monomers in solution or suspension at temperatures up to 200°C using free-radical polymerization initiators, characterized in that polysaccharides, preferably starch, starch degradation products and starch derivatives, cellulose, cellulose degradation products and/or cellulose derivatives are used as polyhydroxy compounds.

12. A process for producing the graft copolymers according to claims 1-9 from polyhydroxy compounds, the reaction products and/or derivatives thereof and monoethylenically unsaturated monomers in solution or suspension at temperatures up to 200°C using free-radical polymerization initiators, characterized in that poly(vinyl alcohol) and/or partially saponified poly(vinyl acetates) and/or partially hydrolyzed poly(vinyl ethers) are used as polyhydroxy compounds.

13. A process for producing the graft copolymers according to claims 1-9 from polyhydroxy compounds, the reaction products and/or derivatives thereof and monoethylenically unsaturated monomers in solution or suspension at temperatures up to 200°C using free-radical polymerization initiators, characterized in that glycerol and/or polyglycerols, particularly diglycerol, triglycerol, and monoisopropylidene diglycerol, or monoisopropylidene triglycerol are used as polyhydroxy compounds.

14. Use of the graft copolymers according to claims 1-9 for binding multivalent metal ions.

15. Use of the graft copolymers according to claims 1-9 for inhibiting water hardness.

16. Use of the graft copolymers according to claims 1-9 as additive and component in detergents and cleaners.

17. Use of the graft copolymers according to claims 1-9 as additive and component in washing baths.

18. Use of the graft copolymers according to claims 1-9 as auxiliary agents in textile finishing.

19. Use of the graft copolymers according to claims 1-9 as auxiliary agents in the pretreatment of fiber raw materials or textile materials.

20. Use of the graft copolymers according to claims 1-9 as auxiliary agents in boiling, bucking and bleaching of fiber raw materials, fibers, and textile materials.

21. Use of the graft copolymers according to claims 1-9 as auxiliary agents for dyeing natural and/or synthetic fibers or textile materials.

22. Use of the graft copolymers according to claims 1-9 as auxiliary agents in textile printing, particularly in rewashing reactive printings and fast dyeings of natural and/or synthetic fibers or textile materials.

23. Use of the graft copolymers according to claims 1-9 as auxiliary agents for desizing natural or synthetic fibers or textile materials.

24. Use of the graft copolymers according to claims 1-9 as auxiliary agents according to claims 18-23, characterized in that they are used in combination with surfactants, particularly anionic surfactants.

25. Use of the graft copolymers according to claims 1-9 as auxiliary agents according to claims 18-24, characterized in that they are used in combination with complexing carboxylic acids.

26. Use of the graft copolymers according to claims 1-9 as auxiliary agents according to claims 19 and 20, 24 and 25, characterized in that they are used in chlorite-free bleaching, preferably in multi-step processes in a modifiable treatment bath or in such continuous processes.

27. Use of the graft copolymers according to claims 1-9 in the production of dispersions of pigments and dyes.

28. Use of the graft copolymers according to claims 1-9 as auxiliary agents in paper manufacturing for producing pigment and filler dispersions and coatings.

29. Use of the graft copolymers according to claims 1-9 as auxiliary agents in leather manufacturing.

## Revendications

1. Copolymères de greffage solubles dans l'eau, à base de composés polyhydroxy, de leurs produits réactionnels et/ou de leurs dérivés, à l'exception de monosaccharides et de disaccharides ainsi que d'oligosaccharides ayant un degré de polymérisation moyen de 1,1 à 20, de sorbite, d'acide tartrique et d'acide gluconique, et d'un mélange de monomères, que l'on peut obtenir par copolymérisation par greffage radicalaire d'un mélange de monomères à base de
A) 45 à 96% en poids d'au moins un acide monocarboxylique en C₃-C₁₀ monoéthyléniquement insaturé et/ou d'au moins un sel d'un tel acide monocarboxylique avec un cation monovalent,
B) 4 à 55% en poids d'au moins un monomère monoéthyléniquement insaturé et contenant des groupes sulfoniques, d'un ester d'acide sulfurique monoéthyléniquement insaturé et/ou d'acide vinylphosphonique et/ou d'un sel de ces acides avec des cations monovalents,
C) 0 à 30% en poids d'au moins un composé monoéthyléniquement insaturé, soluble dans l'eau, qui est modifié par 2-50 moles d'oxyde d'alkyléne par mole,
D) 0 à 45% en poids d'au moins un autre monomère polymérisable par voie radicalaire, soluble dans l'eau,
E) 0 à 30% en poids d'un monomère polymérisable par voie radicalaire, peu soluble ou insoluble dans l'eau,
la somme de A à E étant de 100% en poids,
en évitant des monomères décarboxylants, en présence de composés polyhydroxy et/ou de leurs produits réactionnels et/ou de leurs dérivés et/ou de leurs mélanges, la teneur en les composés polyhydroxy et/ou leurs dérivés et/ou leurs produits réactionnels étant dans le mélange global de 1-60% en poids, de préférence de 5-40% en poids, et avantageusement de 5-30% en poids.

2. Copolymères de greffage suivant la revendication 1, caractérisés en ce qu'ils contiennent, comme composés polyhydroxy, des polysaccharides, de préférence de l'amidon, des produits de dégradation d'amidon et des dérivés d'amidon, de la cellulose, des produits de dégradation de cellulose et/ou des dérivés de cellulose.

3. Copolymères de greffage suivant la revendication 1, caractérisés en ce qu'ils contiennent, comme composés polyhydroxy, de l'alcool polyvinylique et/ou des acétates de polyvinyle partiellement saponifiés et/ou des éthers polyvinyliques partiellement hydrolysés.

4. Copolymères de greffage suivant la revendication 1, caractérisés en ce qu'ils contiennent, comme composés polyhydroxy, de la glycérine et/ou des polyglycérines, en particulier de la diglycérine, de la triglycérine et de la monoisopropylidèneglycérine ou de la monoisopropylidènetriglycérine.

5. Copolymères de greffage suivant la revendication 1, caractérisés en ce qu'ils contiennent, comme monomères A, de l'acide acrylique et/ou méthacrylique, leurs sels de métal alcalin, d'ammonium et/ou d'amine.

6. Copolymères de greffage suivant la revendication 1, caractérisés en ce que, comme monomères B), ils contiennent de l'acide allylsulfonique, de l'acide méthallylsulfonique, de l'acide acrylamidométhylpropanesulfonique, de l'acide vinylsulfonique, de l'acrylate ou du méthacrylate de sulfatoéthyle, de l'acide vinylphosphonique et/ou les sels de ces acides avec des cations monovalents.

7. Copolymères de greffage suivant la revendication 1, caractérisés en ce qu'ils contiennent, comme composés solubles dans l'eau, monoéthyléniquement insaturés, modifiés par de l'oxyde d'alkylène, de l'alcool allylique ou les esters d'acides carboxyliques insaturés, tels que de l'acide acrylique ou de l'acide méthacrylique, dont le composant alcool est modifié par de l'oxyde d'alkyléne.

8. Copolymères de greffage suivant la revendication 1, caractérisés en ce que, comme monomères D, ils contiennent des monomères ayant une action d'augmentation du poids moléculaire, de préférence ceux ayant des doubles liaisons plusieurs fois monoéthyléniquement insaturées et/ou une double liaison éthyléniquement insaturée et un autre groupe fonctionnel à action de réticulation.

9. Copolymères de greffage suivant la revendication 1, caractérisés en ce que, comme monomères E, ils contiennent des esters d'acide alkyl- et/ou hydroxyalkyl-(méth)acrylique, des esters monoalkyliques et/ou dialkyliques d'acide maléique, des N-alkyl- et/ou N,N-dialkyl-(méth)-acrylamides, et/ou des esters d'acide vinylcarboxylique.

10. Procédé de préparation de copolymères de greffage suivant l'une des revendications 1 à 9, à partir de composés polyhydroxy, de leurs produits réactionnels et/ou de leurs dérivés et de monomères monoéthyléniquement insaturés en solution ou en suspension, à des températures allant jusqu'à 200°C, au moyen d'initiateurs de polymérisation radicalaire, caractérisé en ce qu'on met en oeuvre un mélange global de 1-60% en poids, de préférence de 5-40% en poids, et particulièrement avantageusement de 5-30% en poids, de composés polyhydroxy, de leurs produits réactionnels et/ou de leurs dérivés, et de 95-40% en poids d'un mélange de monomères à base de
A) 45 à 96% en poids d'au moins un acide monocarboxylique en C₃-C₁₀ monoéthyléniquement insaturé ou de ses sels avec des cations monovalents,
B) 4 à 55% en poids d'au moins un monomère monoéthyléniquement insaturé et contenant des groupes sulfoniques, d'un ester d'acide sulfurique monoéthyléniquement insaturé et/ou d'acide vinylphosphonique et/ou des sels de ces acides avec des cations monovalents,
C) 0 à 30% en poids d'au moins un composé monoéthyléniquement insaturé, soluble dans l'eau, qui a été modifié par 2-50 moles d'oxyde d'alkyléne par mole,
D) 0 à 45% en poids d'au moins un autre monomère soluble dans l'eau, polymérisable par voie radicalaire,
E) 0 à 30% en poids d'un autre monomère polymérisable par voie radicalaire, peu soluble ou insoluble dans l'eau,
la somme de A à E étant de 100%, et en ce que les composants dû mélange global à base de composants polyhydroxy et de monomères monoéthyléniquement insaturés sont, pour la polymérisation introduits globalement ou uniquement en parties, le reste étant dosé ou tous les composants étant dosés.

11. Procédé de préparation de copolymères de greffage suivant l'une des revendications 1 à 9 à partir de composés polyhydroxy, de leurs produits réactionnels et/ou de leurs dérivés et de monomères monoéthyléniquement insaturés en solution ou en suspension, à des températures allant jusqu'à 200°C, au moyen d'initiateurs de polymérisation radicalaire, caractérisé en ce que, comme composés polyhydroxy, on utilise des polysaccharides, de préférence de l'amidon, des produits de dégradation d'amidon et des dérivés d'amidon, de la cellulose, des produits de dégradation de cellulose et/ou des dérivés de cellulose.

12. Procédé de préparation de copolymères de greffage suivant l'une des revendications 1 à 9, à partir de composés polyhydroxy, de leurs produits réactionnels, de leurs dérivés ou de leurs mélanges et de monomères monoéthyléniquement insaturés en solution ou en suspension, à des températures allant jusqu'à 200°C, au moyen d'initiateurs de polymérisation radicalaire, caractérisé en ce que, comme composés polyhydroxy, on utilise de l'alcool polyvinylique et/ou des acétates de polyvinyle partiellement saponifiés et/ou des éthers polyvinyliques partiellement hydrolysés.

13. Procédé de préparation de copolymères de greffage suivant l'une des revendications 1 à 9, à partir de composés polyhydroxy, de leurs produits réactionnels, de leurs dérivés ou de leurs mélanges et de monomères monoéthyléniquement insaturés en solution ou en suspension, à des températures allant jusqu'à 200°C, au moyen d'initiateurs de polymérisation radicalaire, caractérisé en ce que, comme composés polyhydroxy, on utilise de la glycérine et/ou des polyglycérines, en particulier de la diglycérine, de la triglycérine et de la monoisopropylidènediglycérine ou de la monoisopropylidènetriglycérine.

14. Utilisation des copolymères de greffage suivant l'une des revendications 1 à 9, pour la fixation d'ions métalliques polyvalents.

15. Utilisation des copolymères de greffage suivant l'une des revendications 1 à 9, pour l'inhibition de la dureté de l'eau.

16. Utilisation des copolymères de greffage suivant l'une des revendications 1 à 9, comme additifs et composants dans des produits de lavage et de nettoyage.

17. Utilisation des copolymères de greffage suivant l'une des revendications 1 à 9, comme additifs et composants dans des bains de lavage.

18. Utilisation des copolymères de greffage suivant l'une des revendications 1 à 9, comme adjuvants pour l'ennoblissement des textiles.

19. Utilisation des copolymères de greffage suivant l'une des revendications 1 à 9, comme adjuvants pour le prétraitement de matières premières fibreuses ou de matières textiles.

20. Utilisation des copolymères de greffage suivant l'une des revendications 1 à 9, comme adjuvants pour le débouillissage, le lessivage et le blanchiment de matières premières fibreuses, de fibres et de matières textiles.

21. Utilisation des copolymères de greffage suivant l'une des revendications 1 à 9, comme adjuvants dans la teinture de fibres naturelles et/ou synthétiques ou de matières textiles.

22. Utilisation des copolymères de greffage suivant l'une des revendications 1 à 9, comme adjuvants dans l'impression des textiles, en particulier lors du lavage ultérieur des impressions réactives et de teintures solides de fibres naturelles et/ou synthétiques ou de matières textiles.

23. Utilisation des copolymères de greffage suivant l'une des revendications 1 à 9, comme adjuvants lors du désencollage de fibres naturelles ou synthétiques de matières textiles.

24. Utilisation des copolymères de greffage suivant l'une des revendications 1 à 9, comme adjuvants suivant les revendications 18 à 23, caractérisée en ce qu'ils sont mis en oeuvre en combinaison avec des agents tensioactifs, en particulier des agents tensioactifs anioniques.

25. Utilisation des copolymères de greffage suivant l'une des revendications 1 à 9, comme adjuvants suivant les revendications 18 à 24, caractérisée en ce qu'ils sont mis en oeuvre en combinaison avec des acides carboxyliques complexants.

26. Utilisation des copolymères de greffage suivant l'une des revendications 1 à 9, comme adjuvants suivant les revendications 19 et 20, 24 et 25, caractérisée en ce qu'ils sont mis en oeuvre pour le blanchiment sans chlorite, en particulier dans des procédés en plusieurs étapes dans un bain de traitement modifiable ou dans de tels processus continus.

27. Utilisation des copolymères de greffage suivant l'une des revendications 1 à 9, pour la fabrication de dispersions de pigments et de colorants.

28. Utilisation des copolymères de greffage suivant l'une des revendications 1 à 9, comme adjuvants lors de la fabrication de papier, pour la préparation de dispersions de pigments et de matières de remplissage, ainsi que pour la préparation de couleurs à coucher.

29. Utilisation des copolymères de greffage suivant l'une des revendications 1 à 9, comme adjuvants dans la fabrication de cuirs.
